(19) Europäisches Patentamt
European Patent Office
Office européen des brevets

(11) Publication number: **0 289 548 B1**

(12) # EUROPEAN PATENT SPECIFICATION

(45) Date of publication of patent specification: **22.07.92 Bulletin 92/30**

(21) Application number: **87907175.1**

(22) Date of filing: **01.10.87**

(86) International application number: **PCT/US87/02521**

(87) International publication number: **WO 88/02771 21.04.88 Gazette 88/09**

(51) Int. Cl.$^5$: **C10M 135/02,** C10M 141/08, C07C 321/00, C10M 125/02, C10M 135/04, C10M 135/06, C10N 30/06

(54) **SULFURIZED COMPOSITONS AND LUBRICANTS.**

The file contains technical information submitted after the application was filed and not included in this specification

(30) Priority: **08.10.86 US 916577**

(43) Date of publication of application: **09.11.88 Bulletin 88/45**

(45) Publication of the grant of the patent: **22.07.92 Bulletin 92/30**

(84) Designated Contracting States: **AT BE CH DE FR GB IT LI LU NL SE**

(56) References cited:
**EP-A- 0 107 282**
**WO-A-86/03772**
**WO-A-86/04601**
**WO-A-86/04602**
**US-A- 3 632 566**
**US-A- 4 582 618**
**US-A- 4 584 113**

(73) Proprietor: **The Lubrizol Corporation**
**29400 Lakeland Boulevard**
**Wickliffe, Ohio 44092 (US)**

(72) Inventor: **ZALAR, Frank, Victor**
**13619 Fox Hills Drive**
**Novelty, OH 44072 (US)**
Inventor: **DAVIS, Kirk, Emerson**
**2105 Aberdeen Drive**
**Euclid, OH 44143 (US)**
Inventor: **WALSH, Reed, Huber**
**8785 Springvalley Drive**
**Mentor, OH 44060 (US)**

(74) Representative: **Crisp, David Norman et al**
**D. YOUNG & CO. 10 Staple Inn**
**London, WC1V 7RD (GB)**

**EP 0 289 548 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention relates to new sulfur-containing compositions which may be suitable particularly for use as additives in lubricants and functional fluids. More particularly, the sulfur-containing compositions of the present invention may be useful in low phosphorus-containing lubricants.

Various compositions prepared by the sulfurization of olefins and olefin-containing compounds are known in the art, as are lubricants containing these products. Typical sulfurized compositions prepared by reacting olefins such as isobutene, diisobutene, and triisobutene with sulfur under various conditions are described in, for example, Chemical Reviews, 65, 237 (1965). Other references describe the reaction of such olefins with hydrogen sulfide to form predominantly mercaptans with sulfides, disulfides and higher poly-sulfides also being formed as by-products. Reference is made to J. AM. Chem. Soc., 60, 2452 (1938), and U.S. Patent 3,419,614. The patent describes a process for increasing the yield of mercaptan by carrying out the reaction of olefin with hydrogen sulfide and sulfur at a high temperature in the presence of various basic materials.

It also has been known that Diels-Alder adducts can be sulfurized to form sulfur-containing compositions which are particularly useful as extreme pressure and anti-wear additives in various lubricating oils. U.S. Patents 3,632,566 and Reissue 27,331 describe such sulfurized Diels-Alder adducts and lubricants containing said adducts. In these patents, the ratio of sulfur to Diels-Alder adduct is described as being a molar ratio of from 0.5:1.0 to 10.0:1.0. The patents indicate that it is normally desirable to incorporate as much stable sulfur into the compound as possible, and therefore, a molar excess of sulfur normally is employed. The disclosed lubricating compositions may contain other additives normally used to improve the properties of lubricating compositions such as dispersants, detergents, extreme pressure agents, and additional oxidation and corrosion-inhibiting agents, etc.

U.S. Patent 4,582,618 describes low phosphorus- and sulfur-containing lubricanting oils containing less than about 0.1% by weight of phosphorus. These oils contain at least one sulfur-containing material which is the reaction product of sulfur and a Diels-Alder adduct in a molar ratio of less than 1.7:1. Such oils pass the CRC L-38 test, and the oils also exhibit good nitrile seal compatability, especially when the sulfur to adduct ratio is less than 1:1.

U.S. Patent 4,191,659 describes the preparation of sulfurized olefinic compounds by the catalytic reaction of sulfur and hydrogen sulfide with olefinic compounds containing from 3 to 30 carbon atoms. Such compounds are reported to being useful in lubricating compositions, particularly those prepared for use as industrial gear lubricants. U.S. Patent 4,119,549 describes a similar procedure for sulfurizing olefins utilizing sulfur and hydrogen sulfide following by removal of low boiling materials from said sulfurized mixture.

Other sulfurized compositions of matter also have been suggested as compositions useful as additives for lubricants. U.S. Patent 2,012,446 describes a method of sulfurizing pine oil which is reported as being useful as an additive for lubricant manufacture. U.S. Patent 3,953,347 describes a sulfurized composition matter which is prepared by reacting sulfur with a mixture of at least one fatty acid ester of a polyhydric alcohol, at least one fatty acid and at least one aliphatic alpha-olefin. These latter compositions are suitable as replacement for sulfurized sperm oil as extreme pressure additives in lubricants. U.S. Patent 4,584,113 describes sulfurized compositions prepared by sulfurizing a mixture of at least one terpene (e.g., pine oil) and at least one other olefinic compound. These sulfurized compositions are useful in lubricants, particularly industrial and gear lubricants.

Organophosphorus and metal organophosphorus compounds are used extensively in lubricating oils as extreme pressure agents and anti-wear agents. Examples of such compounds include: phosphosulfurized hydrocarbons such as the reaction product of a phosphorus sulfide with turpentine; phosphorus esters including dihydrocarbon and trihydrocarbon phosphites; and metal phosphorodithioates such as zinc dialkylphosphorodithioates. Because of the toxicological problems associated with the use of organophosphorus compounds, and particularly with the metal dialkylphosphorodithioates, there is a need to develop lubricant compositions containing low levels of phosphorus yet characterized as having acceptable oxidation inhibition and anti-wear properties. Lubricants containing low levels of phosphorus also are desirable in view of the tendency of phosphorus to poison catalytic converters used to control emissions from gasoline engines.

According to one aspect of the present invention there is provided a sulfur-containing composition comprising the combination of :

(A) at least one first sulfur-containing material which comprises the reaction product of a sulfur source and at least one Diels-Alder adduct in a molar ratio of at least 1.7:1; and

(B) at least one second material which comprises :

(1) the reaction product of a sulfur source and a Diels-Alder adduct in a ratio of less than 1.7:1,

(2) a terpene compound, or

(3) sulfur-containing materials obtained by sulfurizing mixtures of a terpene compound and an olefinic

compound.

Such sulfur-containing compositions are useful as additives in lubricant compositions such as lubricating oils and greases which also are described. The lubricant compositions containing the sulfur-containing compositions of the present invention exhibit improved antioxidant characteristics and/or extreme pressure properties, and such oils pass the CRC L-38 test. The compositions also are useful as additives to functional fluids which may be hydrocarbon-based or aqueous-based.

According to another aspect of the present invention there is provided an additive concentrate comprising a substantially inert, normally liquid diluent and 20-90% by weight of the sulfur-containing composition according to the present invention.

According to a further aspect of the present invention there is provided a lubricant or functional fluid composition comprising a major amount of at least one oil of lubricating viscosity and a minor amount of a sulfur-containing composition according to the present invention.

According to yet another aspect of the present invention there is provided a process for the preparation of a sulfur-containing composition comprising admixing :

(A) at least one first sulfur-containing material which comprises the reaction product of a sulfur source and at least one Diels-Alder adduct in a molar ratio of at least 17:1, and

(B) at least one second material which comprises:

(1) the reaction product of a sulfur source and a Diels-Alder adduct in a molar ratio of less than 1.7:1,

(2) a terpene compound, or

(3) sulfur-containing materials obtained by sulfurizing mixtures of a terpene compound and an olefinic compound.

Various preferred features and embodiments of the present invention will now be described by way of non-limiting example.

The sulfur-containing compositions of the present invention comprise a combination of at least two materials which are identified as component (A) and component (B).

(A): The First Sulfur-Containing Material

Component (A) is at least one sulfur-containing material which comprises the reaction product of a sulfur source and at least one Diels-Alder adduct in a molar ratio of at least 1.7:1. Generally, the molar ratio of sulfur source to Diels-Alder adduct is in a range of from 1.8 to 4.0. In one embodiment the molar ratio of sulfur to adduct is from 1.8:1 to 2.2:1.

Sulfurized Diels-Alder adducts are described in the prior art such as in U.S. Patent 3,632,566 and Reissue Patent 27,331. In these patents, the ratio of sulfur to Diels-Alder adduct is described as being a molar ratio of from 0.5:1.0 to 10:1.0. However, in the present invention, the first component (A) is a sulfurized adduct wherein the molar ratio is at least 1.7:1.

The Diels-Alder adducts are a well-known, art-recognized class of compounds prepared by the diene synthesis or Diels-Alder reaction. A summary of the prior art relating to this class of compounds is found in the Russian monograph, Dienovyi Sintes, Izdatelstwo Akademii Nauk SSSR, 1963 by A.S. Onischenko. (Translated into the English language by L. Mandel as A.S. Onischenko, Diene Synthesis, N.Y., Daniel Davey and Co., Inc., 1964.)

Basically, the diene synthesis (Diels-Alder reaction) involves the reaction of at least one conjugated diene, >C=C-C=C<, with at least one ethylenically or acetylemically umsaturated compoumd, >C=C< or -C=C-, these latter compounds being known as dienophiles. The reaction can be represented as follows:

Reaction 1 :

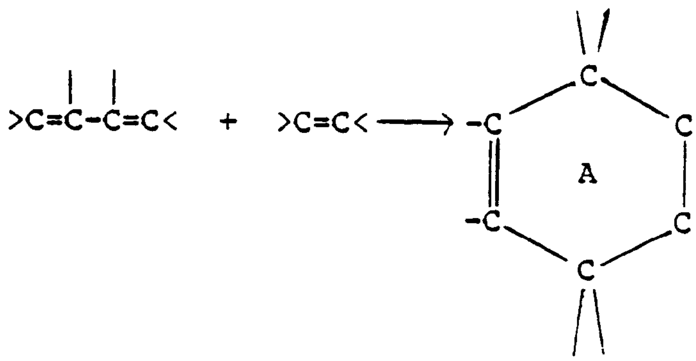

Reaction 2 :

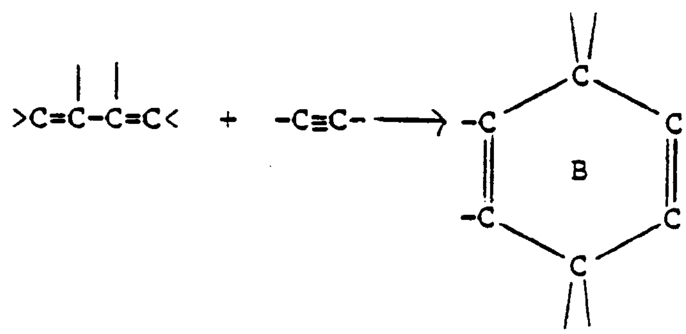

The products, (A) and (B) are commonly referred to as Diels-Alder adducts. It is these adducts which are used as starting materials for the preparation of the sulfurized Diels-Alder adducts utilized in the invention.

Representative examples of such 1,3-dienes include aliphatic conjugated diolefins or dienes of the formula

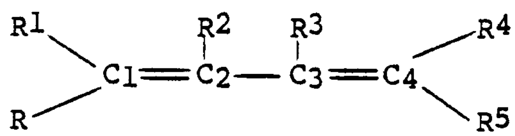

(I)

wherein R through $R^5$ are each independently selected from the group consisting of halogen, alkyl, halo, alkoxy, alkenyl, alkenyloxy, carboxy, cyano, amino, alkylamino, dialkylamino, phenyl, and phenyl-substituted with 1 to 3 substituents corresponding to R through $R^5$ with the proviso that a pair of R′s on adjacent carbons do not form an additional double bond in the diene. Preferably not more than three of the R variables are other than hydrogen and at least one is hydrogen. Normally the total carbon content of the diene will not exceed 20. In one preferred aspect of the invention, adducts are used where $R^2$ and $R^3$ are both hydrogen and at least one of the remaining R variables is also hydrogen. Preferably, the carbon content of these R variables when other than hydrogen is 7 or less. In this most preferred class, those dienes where R, $R^1$, $R^4$, and $R^5$ are hydrogen, chloro, or lower alkyl are especially useful. Specific examples of the R variables include the following groups: methyl, ethyl, phenyl, HOOC-, N≡C-, $CH_3O$-, $CH_3COO$-, $CH_3CH_2O$-, $CH_3C(O)$-, HC(O)-, Cl, Br, tert-butyl, $CF_3$, tolyl, etc. Piperylene, isoprene, methylisoprene, chloroprene, and 1,3-butadiene are among the preferred dienes for use in preparing the Diels-Alder adducts.

In addition to these linear 1,3-conjugated dienes, cyclic dienes are also useful as reactants in the formation of the Diels-Alder adducts. Examples of these cyclic dienes are the cyclopentadienes, fulvenes, 1,3-cyclohexadienes, 1,3-cycloheptadienes, 1,3,5-cycloheptatrienes, cyclooctatetraene, and 1,3,5-cyclononatrienes. Various substituted derivatives of these compounds enter into the diene synthesis.

The dienophiles suitable for reacting with the above dienes to form the adducts used as reactants can be represented by the formula

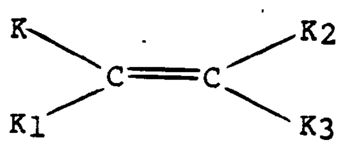

(II)

wherein the K variables are the same as the R variables in Formula I above with the proviso that a pair of K's may form am additional carbon-to-carbon bond, i.e., $K-C \equiv C-K_2$, but do not necessarily do so.

A preferred class of dienophiles are those wherein at least one of the K variables is selected from the class of electron-accepting groups such as formyl, cyano, nitro, carboxy, carbohydrocarbyloxy, hydrocarbyl-carbonyl, hydrocarbylsulfonyl, carbamyl, acylcarbamyl, N-acyl-N-hydrocarbylcarbamyl, N-hydrocarbylcarbamyl, and N,N-dihydrocarbylcarbamyl. Those K variables which are not electron-accepting groups are hydrogen, hydrocarbyl, or substituted-hydrocarbyl, groups. Usually the hydrocarbyl and substituted hydrocarbyl groups will not contain more than 10 carbon atoms each.

The hydrocarbyl groups present as N-hydrocarbyl substituents are preferably alkyl of 1 to 30 carbons and especially 1 to 10 carbons. Representative of this class of dienophiles are the following: nitroalkenes, e.g., 1-nitrobutene-1, 1-nitropentene-1, 3-methyl-1-mitrobutene-1, 1-nitroheptene-1, 1-nitrooctene-1, 4-ethoxy-1-nitrobutene-1; alpha, beta-ethylenically unsaturated aliphatic carboxylic acid esters, e.g., alkylacrylates and alpha-methyl alkylacrylates (i.e., alkyl methacrylates) such as butylacrylate and butylmethacrylate, decyl acrylate and decylmethacrylate, di-(n-butyl)-maleate, di-(t-butyl-maleate); acrylonitrile, methacrylonitrile, beta-nitrostyrene, methyl-vinyl-sulfone, acrolein, acrylic acid; alpha, beta-ethylenically unsaturated aliphatic carboxylic acid amides, e.g., acrylamide, N,N-dibutylacrylamide, methacrylamide, N-dodecylmethacrylamide, N-pentylcrotonamide; crotonaldehyde, crotonic acid, beta, beta-dimethyldivinylketone, methyl-vinylketone, N-vinyl pyrrolidone and alkenyl halides.

One preferred class of dienophiles are those wherein at least one, but not more than two of K variables is $-C(O)O-R_o$ where $R_o$ is the residue of a saturated aliphatic alcohol of up to about 40 carbon atoms, e.g., for example at least one K is carbohydrocarbyloxy such as carboethoxy, carbobutoxy, etc., the aliphatic alcohol from which $-R_o$ is derived can be a mono or polyhydric alcohol such as alkyleneglycols, alkanols, aminoalkanols, alkoxy-substituted alkanols, ethanol, ethoxy ethanol, propanol, beta-diethylamino-ethanol, dodecyl alcohol, diethylene glycol, tripropylene glycol, tetrabutylene glycol, hexanol, octanol, isooctyl alcohol, and the like. In this especially preferred class of dienophiles, not more than two K variables will be $-C(O)-O-R_o$ groups and the remaining K variables will be hydrogen or lower alkyl, e.g., methyl, ethyl, propyl and isopropyl.

Specific examples of dienophiles of the type discussed above are those wherein at least one of the K variables is one of the following groups: hydrogen, methyl, ethyl, phenyl, HOOC-, HC(O)-, $CH_2=CH-$, HC=C-, $CH_3C(O)O-$, $ClCH_2-$, $HOCH_2-$, alpha-pyridyl, $-NO_2$, Cl, Br, propyl and iso-butyl.

In addition to the ethylenically unsaturated dienophiles, there are many useful acetylenically unsaturated dienophiles such as propiolaldehyde, methyl- ethynylketone, propylethynylketone, propenylethynylketone, propiolic acid, propiolic acid nitrile, ethylpropiolate, tetrolic acid, propargylaldehyde, acetylene-dicarboxylic acid, the dimethyl ester of acetylenedicarboxylic acid and dibenzoylacetylene.

Cyclic dienophiles include cyclopentenedione, coumarin, 3-cyanocoumarin, dimethyl maleic anhydride, 3,6-endomethylene-cyclohexenedicarboxylic acid, etc. With the exception of the unsaturated dicarboxylic anhydrides derived from linear dicarboxylic acids (e.g., maleic anhydride, methylmaleic anhydride, chloromaleic anhydride), this class of cyclic dienophiles are limited in commercial usefulness due to their limited availability and other economic considerations.

The reaction products of these dienes and dienophiles correspond to the general formulae

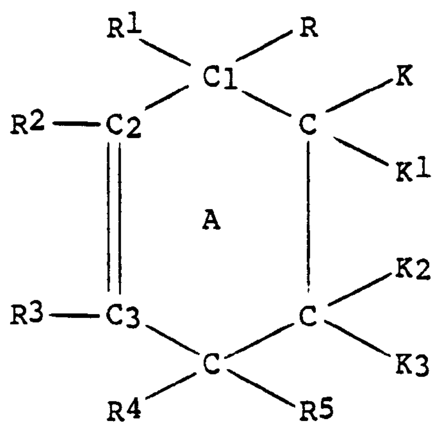

(III)

and

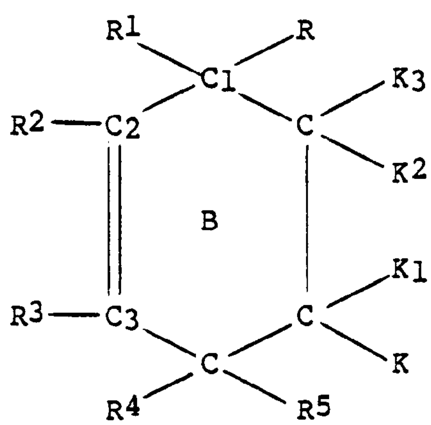

wherein R through $R^5$ and K through $R_3$ are as defined hereinbefore. If the dienophile moiety entering into the reaction is acetylenic rather than ethylenic, two of the K variables, one from each carbon, form another carbon-to-carbon double bond. Where the diene and/or the dienophile is itself cyclic, the adduct obviously will be bicyclic, tricyclic, fused, etc., as exemplified below:

<u>Reaction 3</u>:

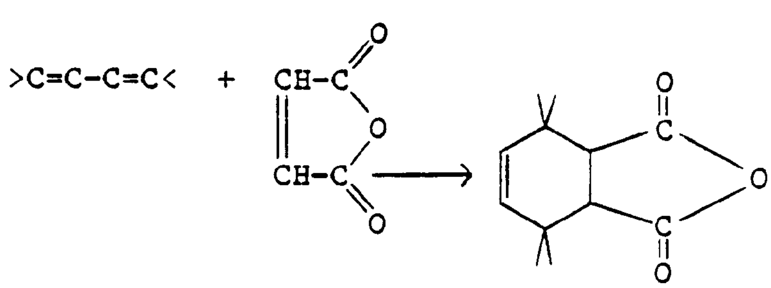

Reaction 4:

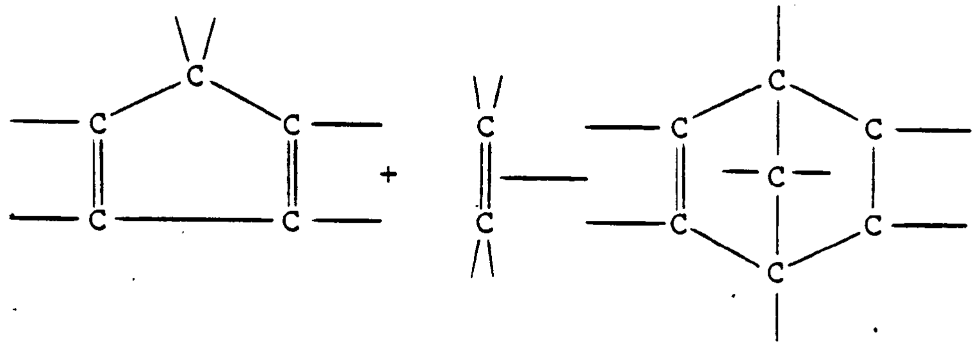

Normally, the adducts involve the reaction of equimolar amounts of diene and dienophile. However, if the dienophile has more than one ethylenic linkage, it is possible for additional diene to react if present in the reaction mixture.

The adducts and processes of preparing the adducts are further exemplified by the following examples. Unless otherwise indicated in these examples and in other parts of this specification, as well as in the appended claims, all parts and percentages are by weight.

EXAMPLE 1

A mixture comprising 400 parts of toluene and 66.7 parts of aluminum chloride is charged to a two-liter flask fitted with a stirrer, nitrogen inlet tube, and a solid carbon dioxide-cooled reflux condenser. A second mixture comprising 640 parts (5 moles) of butyl acrylate and 240.8 parts of toluene is added to the $AlCl_3$ slurry while maintaining the temperature within the range of 37-58°C over a 0.25-hour period. Thereafter, 313 parts (5.8 moles) of butadiene is added to the slurry over a 2.75-hour period while maintaining the temperature of the reaction mass at 50-61°C by means of external cooling. The reaction mass is blown with nitrogen for about 0.33 hour and them transferred to a four-liter separatory funnel and washed with a solution of 150 parts of concentrated hydrochloric acid in 1100 parts of water. Thereafter, the product is subjected to two additional water washings using 1000 parts of water for each wash. The washed reaction product is subsequently distilled to remove unreacted butyl acrylate and toluene. The residue of this first distillation step is subjected to further distillation at a pressure of 9-10 millimeters of mercury whereupon 785 parts of the desired product is collected over the temperature of 105-115°C.

EXAMPLE 2

The adduct of isoprene and acrylonitrile is prepared by mixing 136 parts of isoprene, 106 parts of acrylonitrile, and 0.5 parts of hydroquinone (polymerization inhibitor) in a rocking autoclave and thereafter heating for 16 hours at a temperature within the range of 130-140°C. The autoclave is vented and the contents decanted thereby producing 240 parts of a light yellow liquid. This liquid is stripped at a temperature of 90°C and a pressure of 10 millimeters of mercury thereby yielding the desired liquid product as the residue.

EXAMPLE 3

Using the procedure of Example 2, 136 parts of isoprene, 172 parts of methyl acrylate, and 0.9 part of hydroquinone are converted to the isoprene-methyl acrylate adduct.

EXAMPLE 4

The adduct of butadiene and dibutyl maleate (810 parts) is prepared by reacting 915 parts of dibutyl maleate, 216 parts of liquified butadiene, and 3.4 parts of hydroquinone in the rocking autoclave according to the technique of Example 2.

EXAMPLE 5

A reaction mixture comprising 378 parts of butadiene, 778 parts of N-vinylpyrrolidone, and 3.5 parts of

hydroquinone is added to a rocking autoclave previously chilled to -35°C. The autoclave is then heated to a temperature of 130-140°C for about 15 hours. After venting, decanting, and stripping the reaction mass, 75 parts of the desired adduct are obtained.

EXAMPLE 6

One-hundred thirty-nine parts (1 mole) of the adduct of butadiene and methyl acrylate is transesterified with 158 parts (1 mole) of decyl alcohol. The reactants are added to a reaction flask and 3 parts of sodium methoxide are added. Thereafter, the reaction mixture is heated at a temperature of 190-200°C for a period of 7 hours. The reaction mass is washed with a 10% sodium hydroxide solution and them 250 parts of naphtha is added. The naphtha solution is washed with water. At the completion of the washing, 150 parts of toluene are added and the reaction mass is stripped at 150°C under pressure of 28 parts of mercury. A dark-brown fluid product (225 parts) is recovered. This product is fractionated under reduced pressure resulting in the recovery of 178 parts of the product boiling in the range of 130-133°C at a pressure of 0.45 to 0.6 parts of mercury.

EXAMPLE 7

The general procedure of Example 1 is repeated except that only 270 parts (5 moles) of butadiene is included in the reaction mixture.

The sulfur-containing materials (A) are readily prepared by heating a mixture of a sulfur source, preferably sulfur and at least one of the Diels-Alder adducts of the types discussed hereinabove at a temperature within the range of from 110°C to just below the decomposition temperature of the Diels-Alder adducts. Temperatures within the range of about 110° to about 200°C will normally be used. This reaction results in a mixture of products, some of which have been identified. In the compounds of known structure, the sulfur reacts with the substituted unsaturated cycloaliphatic reactants at a double bond in the nucleus of the unsaturated reactant.

The reaction can be conducted in the presence of suitable inert organic solvents such as mineral oils, alkames of 7 to 18 carbons, etc., although no solvent is generally necessary. After completion of the reaction, the reaction mass can be filtered and/or subjected to other conventional purification techniques. There is no need to separate the various sulfur-containing products as they can be employed in the form of a reaction mixture comprising the compounds of known and unknown structure.

As hydrogen sulfide is am undesirable contaminent, it is advantageous to employ standard procedures for assisting in the removal of the $H_2S$ from the products. Blowing with steam, alcohols, air, or nitrogen gas assists in the removal of $H_2S$ as does heating at reduced pressures with or without the blowing.

When the Diels-Alder adduct is of the type represented by Formula III (A) or (B), the sulfur-containing products of known structure correspond to the following generic formulae:

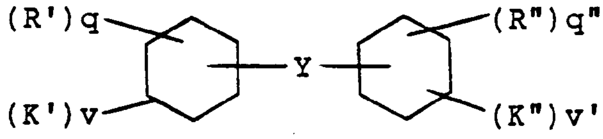

(IV)

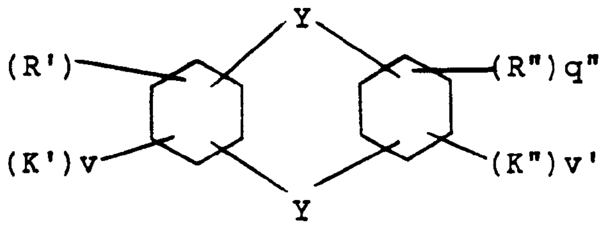

(V)

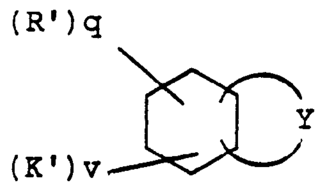

(VI)

wherein R′ and R″ are the same as R through $R^5$ above and K′ and k″ are the same as K through $K_3$ above. Y is a divalent sulfur group. The variables q and q″ are zero or a positive whole number of 1 to 6 while v and v′ are zero or positive whole numbers of 1 to 4, at least one of R′, R″, K′, and K″ in each compound being other than hydrogen or a saturated aliphatic hydrocarbon group. Generally not more than five of the R and K variables om each ring are other than hydrogen. Preferably, at least one K variable in each compound will be an electron accepting group of the type discussed supra. The preferred class of substituents discussed herein-before with regard to the various "K" and "R" variables om the intermediates for making the Diels-Alder adducts and the adducts themselves obviously applies to the final products prepared from the intermediates.

An especially preferred class of sulfurized Diels-Alder adducts within the ambit of Formulae IV-VI is that wherein at least one of the K variables is an electron accepting group from the class consisting of

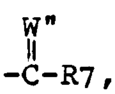, 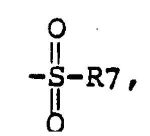, $-C{\equiv}N$, and $-NO2$

wherein W″ is oxygen or divalent sulfur, and $R_7$ is hydrogen, halo, alkyl of 1 to 30 carbons, alkenyl of 1 to 30 carbons, hydroxy, alkoxy of 1 to 30 carbons, alkenoxy of 1 to 30 carbons, amino, alkylamino and dialkylamine wherein the alkyl groups contain from 1 to 30 carbons and preferably 1 to 10 carbons. Preferably, W″ is oxygen. When $R_7$ is halo, chloro is preferred. Particularly useful are those compounds wherein the R′s are hydrogen or lower alkyl and one K variable is carboalkoxy of up to 31 carbon atoms, the remaining K groups being hydrogen, lower alkyl, or another electron accepting group. Within this latter group, those wherein the carboalkoxy group is carbo-n-butoxy produce excellent results as lubricant additives.

It is sometimes advantageous to incorporate materials useful as sulfurization catalysts in the reaction mixture. These materials may be acidic, basic or neutral. Useful neutral and acidic materials include acidified clays such as "Super Filtrol", p-toluenesulfonic acid, dialkylphosphorodithioic acids, phosphorus sulfides such as phosphorus pentasulfide and phosphites such as triaryl phosphites (e.g., triphenyl phosphite).

The basic materials may be inorganic oxides and salts such as sodium hydroxide, calcium oxide and sodium sulfide. The most desirable basic catalysts, however, are nitrogen bases including ammonia and amines. The amines include primary, secondary and tertiary hydrocarbyl amines wherein the hydrocarbyl radicals are alkyl, aryl, aralkyl, alkaryl or the like and contain 1-20 carbon atoms. Suitable amines include aniline, benzylamine, dibenzylamine, dodecylamine, naphthylamine, tallow amines, N-ethyldipropylamine, N-phenylbenzylamine, N,N-diethylbutylamine, m-toluidine and 2,3-xylidine. Also useful are heterocyclic amines such as pyrrolidine, N-methylpyrrolidine, piperidine, pyridine and quinoline.

The preferred basic catalysts include ammonia and primary, secondary, or tertiary alkylamines having 1-8 carbon atoms in the alkyl radicals. Representative amines of this type are methylamine, dimethylamine, trimethylamine, ethylamine, diethylamine, triethylamine, di-m-butylamine, tri-m-butylamine, tri-sechexylamine and tri-n-octylamine. Mixtures of these amines can be used, as well as mixtures of ammonia and amines.

When a catalyst is used, the amount is generally 0.05-2.0% of the weight of the adduct.

The following examples illustrate the preparation of the sulfur-containing materials (A) useful in the present invention.

EXAMPLE AA

A reaction flask is charged with 640 parts (20 moles) of sulfur flowers which is heated at 170°C for about 0.3 hour. Thereafter, 600 parts (4 moles) of the isoprene-methacrylate adduct of Example 3 is added dropwise to the molten sulfur while maintaining the temperature at 174-198°C. Upon cooling to room temperature the reaction mass is filtered, and the filtrate is the desired product.

EXAMPLE AB

A reaction vessel is charged with 750 parts (5 moles) of the isoprenemethacrylate adduct of Example 3, and the adduct is heated to about 105°C under reflux conditions. To this heated adduct, there is added 320 parts (10 moles) of sulfur flowers in five increments over a 0.75-hour period while maintaining the temperature of the reaction mass at 105-112°C. The reaction mixture is heated for 6 hours at 150-155°C while bubbling nitrogen through the reaction mass at a rate of 0.25 to 0.5 SCFH ($6.45 \times 10^{-6}$-$1.29 \times 10^{-5} m^2/s$). The reaction mass is then cooled and filtered at room temperature yielding 1005 parts of the desired product.

EXAMPLE AC

A reaction mixture comprising 1175 parts (6 moles) of the Diels-Alder adduct of butyl acrylate and isoprene, and 384 parts (12 moles) of sulfur flowers is heated for 0.5 hour at 108-110°C, and then to 155-165°C for 6 hours while bubbling nitrogen gas through the reaction mixture at 0.25 to 0.5 SCFH ($6.45 \times 10^{-6}$-$1.29 \times 10^{-5} m^2/s$). At the end of this heating period the reaction mixture is allowed to cool and is filtered at room temperature. The product is allowed to stand at room temperature for one day and refiltered. The filtrate weighs 1278 parts and is the desired product.

EXAMPLE AD

A reaction mixture of 7.96 moles of sulfur flowers and 3.98 moles of an isoprenemethylmethacrylate. adduct is prepared and heated for one hour at 110°C while blowing nitrogen through the reaction masss. The temperature of the mixture then is raised to 150-155°C and maintained at this temperature for about 6 hours while maintaining the nitrogen blowing. The mixture them is cooled to room temperature and filtered. The filtrate consists of 842 parts of the reaction mixture of the desired sulfur-containing product.

EXAMPLE AE

A reaction mixture of 700 parts (5.04 moles) of the adduct of butadiene and methylacrylate and 323 parts (10.08 moles) of sulfur flowers is prepared in the presence of 3% by weight based on the adduct, of hydroquinone. The reactants are heated under reflux conditions while bubbling nitrogen through the reaction mass. During the first hour the temperature reaches 110°C and during the second hour, the temperature reaches 140°C. Thereafter, the mixture is maintained at 150-160°C for 6 hours, cooled to room temperature and filtered twice. The filtrate consists of 930 parts of the desired sulfur-containing products.

EXAMPLE AF

A mixture of 550 parts (4 moles) of a butadiene-methylacrylate adduct and 256 parts of sulfur flowers (8 moles) is prepared and heated under reflux conditions for about 8.5 hours at a temperature within the range of 150-160°C while bubbling nitrogen through the reaction mass. Upon cooling to room temperature, the product is filtered yielding 810 grams of the desired product as the filtrate.

EXAMPLE AG

Into a reaction vessel there is added 224 parts of sulfur flowers (7.0 moles) which is heated to 120°C to convert the sulfur to the molten state. Thereafter, 280 parts of the adduct of isoprene and decylacrylate are added in increments while raising the temperature of the reaction mass to 200°C. The reaction mass is maintained at a temperature of 200-244°C for about 11.5 hours. The reaction mixture is cooled to yield 366 parts of the desired product.

It has been found in some instances that, if the sulfur-containing products of this invention are treated with am aqueous solution of sodium sulfide containing from 5% to 75% by weight $Na_2S$, the treated product may exhibit less of a tendency to darken freshly polished copper metal.

Treatment involves the mixing together of the sulfurized reaction product and the sodium sulfide solution for a period of time sufficient for any unreacted sulfur to be scavenged, usually a period of a few minutes to several hours depending on the amount of unreacted sulfur, the quantity and the concentration of the sodium sulfide solution. The temperature is not critical but normally will be in the range of 20°C to 100°C. After the treatment, the resulting aqueous phase is separated from the organic phase by conventional techniques, i.e., decantation, etc. Other alkali metal sulfides, $M_2S_x$ where M is an alkali metal and x is 1, 2, or 3 may be used to scavenge unreacted sulfur but those where x is greater than 1 are not nearly as effective. Sodium sulfide solutions are preferred for reasons of economy and effectiveness. This procedure is described in more detail in U.S. Patent 3,498,915.

It has also been determined that treatment of the reaction products with solid, insoluble acidic materials such as acidified clays or acidic resins and thereafter filtering the sulfurized reaction mass improves the product with respect to its color and solubility characteristics. Such treatment comprises thoroughly mixing the reaction mixture with from 0.1% to 10% by weight of the solid acidic material at a temperature of 25-150°C and subsequently filtering the product.

As previously mentioned, there is no need to separate and isolate the sulfur-containing products which are produced in the above reactions. The reaction product is a mixture which comprises the compounds whose structures have been ascertained but which also comprises compounds whose structures are unknown. Since it is economically unfeasible and unnecessary to separate the components of the reaction mixture, they are employed in combination as a mixture of sulfur-containing materials.

(B): Second Material

The sulfur-containing compositions of the present invention contain, in addition to component (A) described above, at least one second material which may be any one or more of the following compounds identified as components (B-1) through (B-3). The amount of component (B) included in the sulfur-containing compositions of the invention may vary over a wide range although the weight ratio of component (A) to component (B) in the compositions of the invention generally will be from 1:10 to 10:1.

(B-1): Sulfurized Adduct

Component (B-1) is the reaction product of a sulfur source and a Diels-Alder adduct in a molar ratio of less than 1.7:1. The sulfur source and the Diels-Alder adduct used to prepare component (B-1) may be the same or different from the sulfur sources and Diels-Alder adduct described above with respect to the preparation of component (A). It is essential, however, that the molar ratio of sulfur source to Diels-Alder adduct in component (B-1) be less than 1.7:1. In another embodiment, the molar ratio of sulfur to Diels-Alder adduct in (B-1) is less than 1.2:1, and may be lower than 1:1. In another embodiment, the molar ratio of sulfur to adduct is from 0.8:1 to 1.2:1.

The sulfurized Diels-Alder adducts of component (B-1) can be prepared in the same manner as the sulfurized adducts of component (A) except that the reaction mixtures contain lesser amounts of the sulfur source. Whereas the sulfur to adduct ratio in component (A) is at least 1.7:1, the sulfur to adduct ratio in component (B-1) is less than 1.7:1. The following examples illustrate the preparation of the sulfur-containing materials (component (B-1)) which contain a sulfur:adduct mole ratio of less than 1.7.

EXAMPLE B-1-A

To 255 parts (1.65 moles) of the isoprene-methacrylate adduct of Example 3 heated to a temperature of 110-120°C, there are added 53 parts (1.65 moles) of sulfur flowers over a 45-minute period. The heating is continued for 4.5 hours at a temperature in the range of 130-160°C. After cooling to room temperature, the reaction mixture is filtered through a medium sintered glass funnel. The filtrate consists of 301 parts of the desired sulfur-containing products.

EXAMPLE B-1-B

A reaction mixture comprising 1175 parts (6 moles) of the Diels-Alder adduct of butyl acrylate and isoprene and 192 parts (6 moles) of sulfur flowers is heated for 0.5 hour at 108-110°C and then to 155-165°C for 6 hours while bubbling nitrogen gas through the reaction mixture at 0.25 to 0.5 standard cubic feet per hour (6.45 x $10^{-6}$-1.29 x $10^{-5}m^2/s$). At the end of the heating period, the reaction mixture is allowed to cool and filtered at room temperature. Thereafter, the product is permitted to stand for 24 hours and refiltered. The filtrate is the desired product.

EXAMPLE B-1-C

Sulfur (4.5 moles) and the adduct of isoprenemethyl methacrylate (4.5 moles) are mixed at room temperature and heated for one hour at 110°C while blowing nitrogen through the reaction mass at 0.25-0.5 standard cubic feet per hour (6.45 x $10^{-6}$-1.29 x $10^{-5}m^2/s$). Subsequently the reaction mixture is raised to a temperature of 150-155°C for 6 hours while maintaining the nitrogen blowing. After heating, the reaction mass is permitted to stand for several hours while cooling to room temperature and is thereafter filtered. The filtrate consists of 842 parts of the desired sulfur-containing product.

EXAMPLE B-1-D

A one-liter flask fitted with a stirrer, reflux, condenser, and nitrogen inlet line is charged with 256 parts (1mole) of the adduct of butadiene and isodecyl acrylate, and 51 grams (1.6 moles) of sulfur flowers and then heated for 12 hours at a temperature, stand for 21 hours, and filtered at room temperature to produce the desired product as the filtrate.

EXAMPLE B-1-E

A mixture of 1703 parts (9.4 moles) of a butyl acrylate-butadiene adduct prepared as in Example 7, 280 parts (8.8 moles) of sulfur and 17 parts of triphenyl phosphite is prepared in a reaction vessel and heated gradually over 2 hours to a temperature of about 185°C while stirring and sweeping with nitrogen. The reaction is exothermic near 160-170°C, and the mixture is maintained at about 185°C for 3 hours. The mixture is cooled to 90°C over a period of 2 hours and filtered using a filter aid. The filtrate is the desired product containing 14.0% sulfur.

EXAMPLE B-1-F

The procedure of Example B-1-E is repeated except that the triphenyl phosphite is omitted from the reaction mixture.

EXAMPLE B-1-G

The procedure of Example B-1-E is repeated except that the triphenyl phosphite is replaced by 2.0 parts of triamyl amine as a sulfurization catalyst.

EXAMPLE B-1-H

A mixture of 547 parts of a butyl acrylate-butadiene adduct prepared as in Example 7 and 5.5 parts of triphenyl phosphite is prepared in a reaction vessel and heated with stirring to a temperature of about 50°C whereupon 94 parts of sulfur are added over a period of 30 minutes. The mixture is heated to 150°C in 3 hours while sweeping with nitrogen. The mixture them is heated to about 185°C in approximately one hour. The reaction is exothermic and the temperature is maintained at about 185°C by using a cold water jacket for a period of about 5 hours. At this time, the contents of the reaction vessel are cooled to 85°C and 33 parts of mineral oil are added. The mixture is filtered at this temperature, and the filtrate is the desired product wherein the sulfur to adduct ratio is 0.98/l.

EXAMPLE B-1-I

The general procedure of Example B-1-H with the exception that the triphenyl phosphite is not included in the reaction mixture.

EXAMPLE B-1-J

A mixture of 500 parts (2.7 moles) of a butyl acrylate-butadiene adduct prepared as in Example 7 and 109 parts (3.43 moles) of sulfur is prepared and heated to 180°C and maintained at a temperature of about 180-190°C for about 6.5 hours. The mixture is cooled while sweeping with a nitrogen gas to remove hydrogen sulfide odor. The reaction mixture is filtered and the filtrate is the desired product containing 15.8% sulfur.

EXAMPLE B-1-K

A mixture of 728 parts (4.0 moles) of a butyl acrylate-butadiene adduct prepared as in Example 7, 218 parts (6.8 moles) of sulfur, and 7 parts of triphenyl phosphite is prepared and heated with stirring to a temperature of about 181°C over a period of 1.3 hours. The mixture is maintained under a nitrogen purge at a temperature of 181-187°C for 3 hours. After allowing the material to cool to about 85°C over a period of 1.4 hours, the mixture is filtered using a filter aid, and the filtrate is the desired product containing 23.1% sulfur.

EXAMPLE B-1-L

A mixture of 910 parts (5 moles) of a butyl acrylate-butadiene adduct prepared as in Example 7, 208 parts (6.5 moles) of sulfur and 9 parts of triphenyl phosphite is prepared and heated with stirring and nitrogen sweeping to a temperature of about 140°C over 1.3 hours. The heating is continued to raise the temperature to 187°C over 1.5 hours, and the material is held at 183-187°C for 3.2 hours. After cooling the mixture to 89°C, the mixture is filtered with a filter aid, and the filtrate is the desired product containing 18.2% sulfur.

EXAMPLE B-1-M

A mixture of 910 parts (5 moles) of a butyl acrylate-butadiene adduct prepared as in Example 7, 128 parts (4 moles) of sulfur and 9 parts of triphenyl phosphite is prepared and heated with stirring while sweeping with nitrogen to a temperature of 142°C over a period of about one hour. The heating is continued to raise the temperature to 185-186°C over about 2 hours and the mixture is ,maintained at 185-187°C for 3.2 hours. After allowing the reaction mixture to cool to 96°C, the mixture is filtered with filter aid, and the filtrate is the desired product containing 12.0% sulfur.

EXAMPLE B-1-N

The general procedure of Example B-1-M is repeated except that the mixture contain 259 parts (8.09 moles) of sulfur. The product obtained in this manner contains 21.7% sulfur.

It has been found in some instances that, if the sulfur-containing materials (B-1) are treated with am aqueous solution of sodium sulfide containing from about 5% to about 75% by weight $Na_2S$, the treated product may exhibit less of a tendency to darken freshly polished copper metal. The treatment for component (B-1) materials is the same as the treatment described above for component (A) materials.

(B-2): Terpene Compounds

The second material, component (B) useful in the compositions of the present invention may be at least one terpene compound. The amount of terpene compound included in the compositions of the present invention can vary over a wide range. Generally, the amount of terpene compound included in the compositions will be am amount sufficient for a weight ratio of component (A) to component (B-2) of 1:10 to 10:1.

The term "terpene compound" as used in the specification and claims is intended to include the various isomeric terpene hydrocarbons having the empirical formula $C_{10}H_{16}$, such as contained in turpentine, pine oil and dipentenes, and the various synthetic and naturally occuring oxygen-containing derivatives. Mixtures of these various compounds generally will be utilized, especially when natural products such as pine oil and turpentine are used. Pine oil, for example, which is obtained by destructive distillation of waste pine wood with super-heated steam comprises a mixture of terpene derivatives such as alpha-terpineol, beta-terpineol, alpha-fenchol, camphor, borneol/isoborneol, fenchone, estragole, dihydro alpha-terpineol, anethole, and other mono-terpene hydrocarbons. The specific ratios and amounts of the various components in a given pine oil will depend upon the particular source and the degree of purification. A group of pine oil-derived products are available commercially from Hercules Incorporated. It has been found that the pine oil products generally known as terpene alcohols available from Hercules Incorporated are particularly useful in the preparation of the sulfurized products of the invention. Examples of such products include alpha-Terpineol containing 95-97% of alpha-terpineol, a high purity tertiary terpene alcohol mixture typically containing 96.3% of tertiary alcohols; Terpineol 318 Prime which is a mixture of isomeric terpineols obtained by dehydration of terpene hydrate and contains 60-65 weight percent of alpha-terpineol and 15-20% beta-terpineol, and 18-20% of other tertiary terpene alcohols. Other mixtures and grades of useful pine oil products also are available from Hercules under such designations as Yarmor 302, Herco pine oil, Yarmor 302W, Yarmor F and Yarmor 60.

(B-3): Sulfurized Terpenes and Other Olefinic Compounds

The second material (B) may comprise (B-3) sulfur-containing materials obtained by sulfurizing mixtures of a terpene (B-2) and at least one other olefinic compound. The terpene compounds and the olefinic compounds can be sulfurized with sulfur, sulfur halides, or mixtures or sulfur or sulfur dioxide with hydrogen sulfide as will be described more fully below. Also, the sulfurization of various terpene compounds has been described in the priort art. For example, the sulfurization of pine oil is described in U.S. Patent 2,012,446.

The terpene compound may be any of the materials identified above with respect to component (B-2).

The olefinic compound may be any of the materials identified below as (B-3b).

(B-3b): Other Olefinic Compound

Compound (B-3b) may be at least one other olefinic compound. Preferably the olefinic compounds may contain at least one olefinic double bond which is defined as a non-aromatic double bond. That is, the double bond connects two aliphatic carbon atoms. Preferably the olefin utilized as component (B,3b) may be defined by the formula

$$R^1R^2C=CR^3R^4 \qquad (VII)$$

wherein each of $R^1$, $R^2$, $R^3$ and $R^4$ is hydrogen or an organic group. In general, the R values in the above formula which are not hydrogen may be satisfied by such groups as $-R^5$, $-C(R^5)_3$, $-COOR^5$, $-CON(R^5)_2$, $-COON(R^5)_4$, -COOM, -CN,

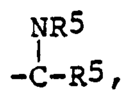

wherein: each $R^5$ is independently hydrogen, alkyl, alkenyl, aryl, alkylaryl, substituted alkyl or substituted alkenyl, with the proviso that any two $R^5$ groups can be alkylene or substituted alkylene whereby a ring of up to about 12 carbon atoms is formed;

M is one equivalent of a metal cation (preferably Group I or II, e.g., sodium, potassium, barium, calcium);

X is halogen (e.g., chloro, bromo, or iodo); and

Y is oxygen or divalent sulfur.

Any two of $R^1$, $R^2$, $R^3$ and $R^4$ may also together form an alkylene or substituted alkylene group; i.e., the olefinic compound may be alicyclic.

The nature of the substituents in the substituted moieties described above is not normally a critical aspect of the invention and any such substituent is useful so long as it is or can be made compatible with lubricating environments and does not interfere under the contemplated reaction conditions. Thus, substituted compounds which are so unstable as to deleteriously decompose under the reaction conditions employed are not contemplated. However, certain substituents such as keto or aldehydo can desirably undergo sulfurization. The selection of suitable substituents is within the skill of the art or may be established through routine testing. Typical of such substituents include any of the above-listed moieties as well as hydroxy, carboxy, carbalkoxy, amidine, amino, sulfonyl, sulfinyl, sulfonate, nitro, phosphate, phosphite, and alkali metal mercapto. The olefinic compound is usually one in which each R group which is not hydrogen is independently alkyl or alkenyl, or (less often) a corresponding substituted group. Monoolefinic and diolefinic compounds, particularly the former, are preferred, and

especially terminal monoolefinic hydrocarbons; that is, those compounds in which $R^3$ and $R^4$ are hydrogen

and $R^1$ and $R^2$ are alkyl (that is, the olefin is aliphatic). Olefinic compounds having at least about 3 carbon atoms, and especially 3 to 36 carbon atoms are desirable. Olefins containing from 8 to 24 carbon atoms are particularly useful.

The olefinic compound also can be an arylaliphatic compound, particularly wherein the aryl group is a phenyl or substituted phenyl group. Specific examples include styrene, alpha-methyl styrene, vinyl toluene, 4-ethyl vinyl benzene.

Propylene, isobutene and their dimers, trimers, tetramers and oligomers, and mixtures thereof are especially preferred olefinic compounds. Examples of useful olefins include isobutene, 1-butene, 1-hexene, 1-octene, diisobutene, cyclohexene, triisobutene, commercially available higher aliphatic alpha-olefins, especially those in the $C_{12-30}$ range, such as 1-hexadecene and 1-octadecene, and commercial mixtures thereof such as $C_{15-20}$ alpha-olefins, $C_{16}$ alpha-olefins, $C_{15-18}$ alpha-olefins and $C_{22-28}$ alpha-olefins.

Polymers of olefins such as, for example, isobutene also are useful so long as they and their sulfurized derivatives are compatible with the other components, and the sulfurized product does not lose its desirable properties. Polybutenes having number average molecular weights of up to 1000 or 1500 are examples of useful polyolefins.

Generally, the olefinic component in (B-3) is at least one aliphatic, aryl aliphatic, or alicyclic olefinic compound containing at least about 3 carbon atoms. Such olefinic compounds containing from 3 to 36 carbon atoms and more preferably from 8 to 24 carbon atoms are particularly useful. It is common to use mixtures of such olefins as component (B-3) since these mixtures are available commercially.

Component (B-3b) also may be an unsaturated fatty acid, an unsaturated fatty acid ester, mixtures thereof, or mixtures thereof with the olefins described above. The term "fatty acid" as used herein refers to acids which may be obtained by hydrolysis of naturally occurring vegetable or animal fats or oils. These fatty acids usually contain from 16 to 20 carbon atoms and are mixtures of saturated and unsaturated fatty acids. The unsaturated fatty acids generally contained in the naturally occurring vegetable or animal fats and oils may contain one or more double bonds and such acids include palmitoleic acid, oleic acid, linoleic acid, linolenic acid, and erucic acid.

The unsaturated fatty acids useful in component (B-3) may comprise mixtures of acids such as those obtained from naturally occurring animal and vegetable oils such as lard oil, tall oil, peanut oil, soybean oil, cottonseed oil, sunflower seed oil, or wheat germ oil. Tall oil is a mixture of rosin acids, mainly abietic acid, and unsaturated fatty acids, mainly oleic and linoleic acids. Tall oil is a by-product of the sulfate process for the manufacture of wood pulp.

The most particularly preferred unsaturated fatty acid esters useful in this invention are the fatty oils, that is, naturally occurring esters of glycerol with the fatty acids described above, and synthetic esters of similar structure. Examples of naturally occurring fats and oils containing unsaturation include animal fats such as Neat's-foot oil, lard oil, depot fat, beef tallow, etc. Examples of naturally occurring vegetable oils useful as component (B-3b) include cottonseed oil, corn oil, poppy-seed oil, safflower oil, sesame oil, soybean oil, sunflower seed oil and wheat germ oil.

The fatty acid esters which are useful as component (B-3b) in the invention also may be prepared from aliphatic olefinic acids of the type described above such as oleic acid, linoleic acid, linolenic acid, and behenic acid by reaction with alcohols and polyols. Examples of aliphatic alcohols which may be reacted with the above-identified acids include monohydric alcohols such as methanol, ethanol, n-propanol, isopropanol and the butanols; and polyhydric alcohols including ethylene glycol, propylene glycol, trimethylene glycol, neopentyl glycol and glycerol.

The sulfur-containing material (B-3) may comprise materials obtained by sulfurizing a mixture of terpenes and other olefinic compounds. The sulfur-containing material (B-3) also can comprise mixtures of sulfurized terpene and sulfurized olefinic compounds. The mixtures may be prepared by mixing one or more sulfurized terpenes with one or more sulfurized olefins; by mixing at least one terpene with at least one sulfurized olefin and thereafter sulfurizing the mixture; by mixing a sulfurized terpene with another olefinic compound and thereafter sulfurizing the mixture; or by preparing a mixture of at least one terpene and at least one other olefinic compound and thereafter sulfurizing the mixture. Accordingly, although in the following discussion, reference is made to the sulfurization of terpene compounds and other olefinic compounds, the discussion is equally applicable to the sulfurization of any of the above-described mixtures wherein not all of the terpene compounds or olefinic compounds have been previously sulfurized.

The amounts of the terpene compounds (B-2) and other olefinic compounds (B-3b) contained in the mixtures to be sulfurized can vary over a wide range although it is essential that when the sulfurized compositions of the present invention are intended to be utilized as lubricant additives, a sufficient amount of the other olefinic compounds should be contained in the mixture to result in a sulfurized composition having the desired oil-solubility. It has been observed that sulfurized terpenes such as sulfurized pine oil generally do not exhibit the desired oil solubility characteristics, and it is essential that the mixture to be sulfurized contain enough of the other olefinic compound to result in the formation of a sulfurized composition having the desired oil-solubility. Generally, the equivalent ratio of component (B-2) to component (B-3b) is from 1:20 to 10:1, and more generally will range from 1:10 to 5:1. More preferably, the equivalent ratio of component (B-2) to component (B-3b) will be from 1:10 to 2:1.

The other olefinic compound, component (B-3b) may be (i) at least one aliphatic, aryl aliphatic or alicyclic olefinic hydrocarbon containing at least 3 carbon atoms, (ii) at least one unsaturated fatty acid or unsaturated fatty acid ester, (iii) at least one sulfurized derivative of (i) or (ii), and (iv) mixtures thereof. The equivalent ratios of the various olefinic compounds when mixtures are utilized can be varied over a wide range, and the particular equivalent ratios will depend upon the raw materials available as well as the properties desired in the sulfurized composition.

It is frequently advantageous to incorporate materials useful as sulfurization promoters in the reaction mixture. These materials may be acidic, basic or neutral. Useful neutral and acidic materials include acidified clays such as "Super Filtrol", p-toluenesulfonic acid, phosphorus-containing reagents such as phosphorus acids (e.g., dialkyl-phosphorodithioic acids, phosphorus acid esters (e.g., triphenyl phosphate), phosphorus sulfides such as phosphorus pentasulfide and surface active agents such as lecithin.

The preferred promoters are basic materials. These may be inorganic oxides and salts such as sodium hydroxide, calcium oxide and sodium sulfide. The most desirable basic promoters, however, are nitrogen bases including ammonia and amines.

The amount of promoter material used is generally 0.0005-2.0% of the combined weight of the terpene and olefinic compounds. In the case of the preferred ammonia and amine catalysts, 0.0005-0.5 mole per mole of the combined weight is preferred, and 0.001-0.1 mole is especially desirable.

Water is also present in the reaction mixture either as a promoter or as a diluent for one or more of the promoters recited hereinabove. The amount of water, when present, is usually 1-25% by weight of the olefinic compound. The presence of water is, however, not essential and when certain types of reaction equipment are used it may be advantageous to conduct the reaction under substantially anhydrous conditions.

When promoters are incorporated into the reaction mixture as described hereinabove, it is generally observed that the reaction can be conducted at lower temperatures, and the product generally is lighter in color.

The sulfur source or reagent used for preparing any of the sulfur-containing materials of this invention may be, for example, sulfur, a sulfur halide such as sulfur monochloride or sulfur dichloride, a mixture of hydrogen sulfide and sulfur or sulfur dioxide, or the like. Sulfur, or mixtures of sulfur and hydrogen sulfide often are preferred. However, it will be understood that other sulfurization reagents may, when appropriate, be substituted therefor. Commercial sources of all the sulfurizing reagents are normally used for the purpose of this invention, and impurities normally associated with these commerical products may be present without adverse results.

When the sulfurization reaction is effected by the use of sulfur alone, the reaction is effected by merely heating the reagents with the sulfur at temperatures of from 50 to 250°C, usually, from 150 to 210°C. The weight ratio of the materials to be sulfurized to sulfur is between 5:1 and 15:1, generally between 5:1 and 10:1. The sulfurization reaction is conducted with efficient agitatiom and generally in an inert atmosphere (e.g., nitrogen). If any of the components or reagents are appreciably volatile at the reaction temperature, the reaction vessel may be sealed and maintained under pressure. It is frequently advantageous to add the sulfur portionwise to the mixture of the other components.

When mixtures of sulfur and hydrogen sulfide are utilized in the process of the invention, the amounts of sulfur and hydrogen sulfide per mole of component(s) to be sulfurized are, respectively, usually 0.3 to 3 gram-atoms and 0.1 to 1.5 moles. A preferred range is from 0.5 to 2.0 gram-atoms and 0.4 to 1.25 moles, respectively, and the most desirable ranges are 0.8 to 1.8 gram-atoms, and 0.4 to 0.8 mole, respectively. In batch operations, the components are introduced at levels to provide these ranges. In semi-continuous operations, they may be admixed at any ratio, but om a mass balance basis, they are present so as to be consumed in amounts within these ratios. Thus, for example, if the reaction vessel is initially charged with sulfur alone, the terpene and/or olefinic compound and hydrogen sulfide are added incrementally at a rate such that the desired ratio is obtained.

When mixtures of sulfur and hydrogen sulfide are utilized in the sulfurization reaction, the temperature range of the sulfurization reaction is generally from 50 to 350°C. The preferred range is 100° to 200°C with 120° to 180°C being especially suitable. The reaction often is conducted under super atmospheric pressure which may be and usually is autogenous pressure (i.e., pressure which naturally developed during the course of the reaction), but may also be externally applied pressure. The exact pressure developed during the reaction is dependent upon such factors as design and operation of the system, the reaction temperature, and the vapor pressure of the reactants and products, and it may vary during the course of the reaction.

While it is preferred generally that the reaction mixture consists entirely of the components and reagents described above, the reaction also may be effected in the presence of an inert solvent (e.g., an alcohol, ether, ester, aliphatic hydrocarbon, halogenated aromatic hydrocarbon, etc.) which is liquid within the temperature range employed. When the reaction temperature is relatively high, for example, at about 200°C, there may be some evolution of sulfur from the product which is avoided is a lower reaction temperature such as from 150-170°C is used.

The sulfurization of components (B-2) and (B-3b) can be carried out sequentially in steps or all in one step simultaneously. The order of the sulfurization of components (B-2) and (B-3b) is not critical to the invention. Accordingly, a mixture of components (B-2) and (B-3b) can be prepared and then sulfurized. In another embodiment, the terpene component (B-2) is sulfurized in accordance with the process of the invention, and thereafter, the other olefinic compound is added to the mixture and the mixture is heated to an elevated temperature to effect the sulfurization of the olefin. In another embodiment, the olefinic compound (B-3b) is first sulfurized, and the terpene compound (B-2) is then added and sulfurized with or without additional sulfur. In yet another embodiment, terpene compound (B-2) is sulfurized, and to the sulfurized terpene compound, there is added a separately prepared sulfurized olefinic compound, and this mixture is heated with or without adding additional sulfur to effect a further sulfurization of the mixture.

The time required for the sulfurization reaction to be completed will vary depending the upon the reagents, the ratios thereof, the reaction temperature, the presence or absence of promoters, and the purity of the reagents. When a mixture of sulfur and sulfur dioxide is used as the sulfurizing agent and the reaction is conducted at am elevated pressure in a closed vessel, the course of the reaction can conveniently be followed by monitoring the pressure in the reaction vessel. The reaction generally can be considered complete when the pressure levels off to a constant value. Following the preparation of the sulfurized mixture by the procedures described above, it is generally preferred to remove substantially all low boiling materials, typically by venting the reaction vessel or by distillation at atmospheric pressure, vacuum distillation or stripping, or the passage of am inert gas such as nitrogen through the mixture at a suitable temperature and pressure. Any solids which are present in the reaction mixture may be removed conveniently, in most instances, by merely pouring off the liquid product. If further removal of solids is desired, such conventional techniques as filtration or centrifugation may be used.

In some instances, it may be desirable to treat the sulfurized product obtained in accordance with the procedures described herein to reduce active sulfur. The term "active sulfur" includes sulfur in a form which can cause staining of copper and similar materials, and standard tests are available to determine sulfur activity. As an alternative to the treatment to reduce active sulfur, metal deactivators can be used and the lubricants containing sulfurized compositions of this invention. In some instances, such as in metal working lubricants, high levels of active sulfur may be desired, and in those situations, it may be preferred not to reduce active sulfur.

The following examples illustrate the preparation of sulfurized terpene compounds, sulfurized olefinic compounds and sulfurized mixtures which are useful as component (B-3) in the present invention. Unless otherwise indicated, all parts and percentages are by weight, and temperatures are in degrees centigrade.

EXAMPLE B-3-A

To a reaction vessel there is charged 372 parts (2 equivalents) of a commercially available pine oil (Sargent Welch), and the pine oil is heated and stirred. Sulfur (128 parts) is added slowly with nitrogen blowing while the reaction temperature is maintained at about 35°C. After addition of the sulfur is completed, nitrogen is bubbled through the reaction mixture while it is heated to reflux at about 145°C. After a total reaction time of about 8 hours, the mixture is filtered through filter aid. The filtrate is the desired sulfurized product containing 23.35% sulfur (theory 25.6).

EXAMPLE B-3-B

The procedure of Example B-3-A is repeated except that the reaction mixture comprises 186 parts of pine oil (1 equivalent) and 32 parts of sulfur (1.0 equivalent). The product obtained in this matter has a sulfur content of 15.6% (theory 14.68).

EXAMPLE B-3-C

To a reaction vessel there is added 372 parts (2 equivalents) of pine oil and 96 parts (3 equivalents) of sulfur. When all of the sulfur is added, the mixture is heated to 150°C with nitrogen blowing, and the mixture is

maintained at this temperature for about 10 hours. The reaction mixture is filtered through a filter aid, and the filtrate is the desired product having a sulfur content of 17.25% (theory 20.5).

EXAMPLE B-3-D

Pine oil (372 parts, 2 equivalents) is added to a reaction vessel and is heated with stirring. Sulfur (190 parts, 6 equivalents) is added slowly to the stirred pine oil, and after addition is completed, nitrogen is blown through the reaction mixture which is heated to a temperature of about 145°C. Triethanol amine (5.62 parts) is added, and heating of the mixture is continued with reflux until the sulfur appears to be dissolved. The mixture is filtered, and the filtrate is the desired product containing 25.4% sulfur (theory 33.80).

EXAMPLE B-3-E

Sulfur (526 parts, 16.4 moles) is charged to a jacketed high pressure reactor which is fitted with an agitator and internal cooling coils. Refrigerated brine is circulated through the coils to cool the reactor prior to the introduction of the gaseous reactants. After sealing the reactor, evacuating to about 2 torr and cooling, 920 parts (16.4 moles) of isobutene and 279 parts (8.2 moles) of hydrogen sulfide are charged to the reactor. The reactor is heated using steam in the external jacket, to a temperature of about 182°C (360°F) over about 1.5 hours. A maximum pressure of 1350 psig. (93 x $10^5$Pa) is reached at about 168°C (335°F) during this heat-up. Prior to reaching the peak reaction temperature, the pressure starts to decrease and continues to decrease steadily as the gaseous reactants are consumed. After about 10 hours at a reaction temperature of about 182°C, the pressure is 310-340 psig. (21-24 x $10^5$Pa) and the rate of pressure change is about 5-10 psig. (3-7 x $10^4$Pa) per hour. The unreacted hydrogen sulfide and isobutene are vented to a recovery system. After the pressure in the reactor has decreased to atmospheric, the sulfurized mixture is recovered as a liquid.

The mixture is blown with nitrogen at about 100°C (212°F) to remove low boiling materials including unreacted isobutene, mercaptans and monosulfides. The residue after nitrogen blowing is agitated with 5% Super Filtrol and filtered, using a diatomaceous earth filter aid. The filtrate is the desired sulfurized composition which contains 42.5% sulfur.

EXAMPLE B-3-F

The procedure of Example B-3-E is repeated except that the isobutylene is replaced by a C16-C18 alpha-olefin, the molar ratio of olefin:sulfur:$H_2S$ is 1:1.5:0.5, and the reaction temperature is about 171°C. The product obtained from this example contains 20.6% sulfur.

EXAMPLE B-3-G

The procedure of Example B-3-E is repeated except that the isobutene is replaced by a polyisobutene having a number average molecular weight of about 1000 as determined by vapor pressure osmometry. The ratio of polyisobutene:sulfur:$H_2S$ is 1:0.5:0.5, and the reaction temperature is 171°C. The sulfurized product obtained in this manner contains about 2.6% sulfur.

EXAMPLE B-3-H

A mixture of 60 parts of commercial $C_{15-20}$ alpha-olefins and 100 parts of lard oil is heated to 160°C under nitrogen, and 12 parts of sulfur are added. The mixture is heated at 165-200°C, and an additional 6.5 parts of sulfur are added. Heating is continued for four hours after which the mixture is cooled to 100°C and filtered. The filtrate is the desired product which contains 9.0% sulfur.

EXAMPLE B-3-I

A mixture of 111 parts (0.5 mole) of a distilled $C_{16}$ alpha-olefin and 93 parts (0.5 mole) of pine oil is prepared and heated with stirring in a reaction vessel. Sulfur (64 parts, 2 moles) is added slowly, and the reaction temperature is raised to about 170°C. The reaction mixture is maintained at a temperature of 160°C with nitrogen blowing. Some refluxing of the light ends of the pine oil is observed. The reaction mixture is then cooled and filtered through a filter aid. The filtrate is the desired product containing 25.16% sulfur (theory 23.9).

EXAMPLE B-3-J

The mixture of 186 parts of pine oil (1 equivalent), 126 parts of nonene (1 equivalent) and 192 parts (6 equivalents) of sulfur is prepared and heated to reflux at about 135°C for 2 hours. After cooling overnight, 10.1 parts of triethyl amine (0.1 equivalent) and 4.3 parts of 2,5-bis(tert-ortyldithic) thiadiazole are added as promoter. The mixture is heated to 135-140°C with nitrogen blowing until the reaction mixture becomes clear. The mixture is heated an additional 6 hours at reflux and filtered through a filter aid. The filtrate is the desired product containing 33.49% sulfur (theory 37.1%).

EXAMPLE B-3-K

A mixture of 93 parts (0.5 equivalent) of pine oil and 48 parts (1.5 equivalents) of sulfur is charged to a reaction vessel equipped with condenser, thermometer and stirrer. The mixture is heated to about 140°C with nitrogen blowing and maintained at this temperature for about 28 hours. After cooling, 111 parts of a $C_{16}$ alpha-olefin (available from Gulf Oil Chemicals Company under the general trade name Gulftene 16) are added through an addition funnel, and after addition is complete, the addition funnel is replaced with a nitrogen tube. The reaction mixture is heated to 170°C with nitrogen blowing and maintained at the temperature for about 5 hours. The mixture is cooled and filtered through a filter aid. The filtrate is the desired product having a sulfur content of 19.01% (theory 19.04%).

EXAMPLE B-3-L

A mixture of 372 parts (2 equivalents) of Yarmor 60 pine oil available from Hercules Incorporated and containing about 62.7% of terpene alcohols, and 192 parts (6 equivalents) of sulfur is prepared in a reaction vessel equipped with a condenser, thermometer and stirrer. The mixture is heated with stirring and nitrogen blowing to a temperature of about 140°C and maintained at this temperature for about 8 hours. Commercial $C_{16}$ alpha-olefin (444 parts, 2 equivalents) is added, and the temperature of the mixture is increased to 170°C and maintained at this temperature for about 8 hours while removing 3 parts of water and 27 parts of light ends. The reaction mixture is cooled to about 100°C and filtered through a filter aid. The filtrate is the desired product containing 18.7% sulfur (theory 19.07%).

EXAMPLE B-3-M

The procedure of Example B-3-L is repeated except that the pine oil utilized in this example is Yarmor F pine oil available from Hercules Incorporated and containing a total of about 75% of terpene alcohol. The product obtained in this manner has a sulfur content of 18.4% (theroy 19.07%).

EXAMPLE B-3-N

A mixture of 744 parts (4 equivalents) of steam distilled pine oil and 384 parts (12 equivalents) of sulfur (8 mesh) is prepared and heated to a temperature of about 140-145°C and maintained at this temperature for about 8 hours. A water trap is then added to the reaction flask whereupon water and light ends are removed. Commercial $C_{16-18}$ alpha-olefin (888 parts, 4 equivalents) is added dropwise over a period of about 45 minutes while maintained at a reaction temperature at about 180°C for about 5 hours. The reaction mixture is cooled and filtered. The filtrate is the desired product containing 17.61% sulfur (theory 20.0%).

EXAMPLE B-3-O

A mixture of 100 parts of the product of Example B-5-A and about 125 parts of the product of Example B-5-E is prepared and heated to a temperature of 200-225°C for 10 hours to yield the desired product upon filtration.

EXAMPLE B-3-P

The procedure of Example B-3-O is repeated except that 32 parts of sulfur are added to the mixture before the mixture is heated to a temperature of 200-225°C.

The sulfur-containing compositions of this invention comprise mixtures of at least one sulfur-containing material identified and described above as component (A) and at least one second material which may be any one or more of the materials identified as (B-1) through (B-3) The weight ratio of (A) to (B) may be varied over a wide range depending upon the nature of the two components and the intended use. Generally, the weight ratio of (A) to (B) in the compositions of the invention is in the range of from 1:10 to 10:1. The ratio for any particular utility can be determined readily by one skilled in the art.

The following non-limiting examples illustrate the compositions of the invention:

| | Parts by Weight |
|---|---|
| Composition 1 | |
| Product of Example AB | 80 |
| Product of Example B-1-H | 50 |
| Composition 2 | |
| Product of Example AC | 50 |
| Product of Example B-1-E | 90 |
| Composition 3 | |
| Product of Example AF | 80 |
| Product of Example B-3-A | 50 |
| Composition 4 | |
| Product of Example AG | 70 |
| Pine oil | 30 |
| Composition 5 | |
| Product of Example AE | 80 |
| Product of Example B-3-K | 50 |
| Composition 6 | |
| Product of Example AC | 50 |
| Product of Example B-3-N | 50 |
| Composition 7 | |
| Product of Example AB | 50 |
| Product of Example B-1-C | 25 |
| Product of Example B-3-N | 25 |

The sulfur-containing compositions of this invention are useful as additives for lubricants in which they function primarily as oxidation inhibitors and extreme pressure and anti-wear agents. The sulfur-containing compositions of the invention also are useful in functional fluids which may be hydrocarbon systems or aqueous systems.

The sulfur-containing compositions of the invention can be effectively employed in a variety of lubricating compositions formulated for a variety of uses. These lubricating compositions are based on diverse oils of lubricating viscosity, including natural and synthetic lubricating oils and mixtures thereof. These lubricating compositions containing the subject additive concentrates are effective as crankcase lubricating oils for spark-ignited and compression-ignited internal combustion engines, including automobile and truck engines, two-cycle engines, aviation piston engines, marine and low-load diesel engines. Also, automatic transmission fluids, transaxle lubricants, gear lubricants, metal-working lubricants, hydraulic fluids, and other lubricating oil and grease compositions can benefit from the incorporation of the subject additive concentrates.

Natural oils include animal oils and vegetable oils (e.g., castor oil, lard oil) as well as mineral lubricating oils such as liquid petroleum oils and solvent-treated or acid-treated mineral lubricating oils of the paraffinic,

naphthenic or mixed paraffinic-naphthenic types. Oils of lubricating viscosity derived from coal or shale are also useful. Synthetic lubricating oils include hydrocarbon oils and halosubstituted hydrocarbon oils such as polymerized and interpolymerized olefins (é.g., polybutylenes, polypropylenes, propylene-isobutylene copolymers, chlorinated polybutylenes, etc.); poly(1-hexenes), poly(1-octenes), poly(1-decenes), etc. and mixtures thereof; alkylbenzenes (e.g., dodecylbenzenes, tetradecylbenzenes, dinonylbenzenes, di-(2-ethylhexyl)-benzenes, etc.); polyphenyls (e.g., biphenyls, terphenyls, alkylated polyphenyls, etc.); alkylated diphenyl ethers and alkylated diphenyl sulfides and the derivatives, analogs and homologs thereof.

Alkylene oxide polymers and interpolymers and derivatives thereof where the terminal hydroxyl groups have been modified by esterification, etherification, etc., constitute another class of known synthetic lubricating oils that can be used. These are exemplified by the oils prepared through polymerization of ethylene oxide or propylene oxide, the alkyl and aryl ethers of these polyoxyalkylene polymers (e.g., methylpolyisopropylene glycol ether having an average molecular weight of about 1000, diphenyl ether of polyethylene glycol having a molecular weight of 500-1000, diethyl ether of polypropylene glycol having a molecular weight of 1000-1500, etc.) or mono- and polycarboxylic esters thereof, for example, the acetic acid esters, mixed $C_{3-8}$ fatty acid esters, or the $C_{13}$Oxo acid diester of tetraethylene glycol.

Another suitable class of synthetic lubricating oils that can be used comprises the esters of dicarboxylic acids (e.g., phthalic acid, succinic acid, alkyl succinic acids, alkenyl succinic acids, maleic acid, azelaic acid, suberic acid, sebacic acid, fumaric acid, adipic acid, linoleic acid dimer, malonic acid, alkyl malonic acids, alkenyl malonic acids, etc.) with a variety of alcohols (e.g., butyl alcohol, hexyl alcohol, dodecyl alcohol, 2-ethylhexyl alcohol, ethylene glycol, diethylene glycol monoether, propylene glycol, etc.) Specific examples of these esters include dibutyl adipate, di(2-ethylhexyl) sebacate, di-n-hexyl fumarate, dioctyl sebacate, diisooctyl azelate, diisodecyl azelate, dioctyl phthalate, didecyl phthalate, dieicosyl sebacate, the 2-ethylhexyl diester of linoleic acid dimer, the complex ester formed by reacting one mole of sebacic acid with two moles of tetraethylene glycol and two moles of 2-ethylhexanoic acid.

Esters useful as synthetic oils also include those made from $C_5$ to $C_{12}$ monocarnoxylic acids and polyols and polyol ethers such as neopentyl glycol, trimethylol propane, pentaerythritol, dipentaerythritol, tripentaerythritol.

Silicon-based oils such as the polyalkyl-, polyaryl-, polyalkoxy-, or polyaryloxy-siloxane oils and silicate oils comprise another useful class of synthetic lubricants (e.g., tetraethyl silicate, tetraisopropyl silicate, tetra-(2-ethylhexyl)silicate, tetra-(4-methyl-hexyl)silicate, tetra-(p-tert-butyl-phenyl)silicate, hexyl-(4-methyl-2-pentoxy)disiloxane, poly-(methyl)siloxanes, poly(methylphenyl)siloxanes, etc.). Other synthetic lubricating oils include liquid esters of phosphorus-containing acids (e.g., tricresyl phosphate, trioctyl phosphate, diethyl ester of decane phosphonic acid, etc.), polymeric tetrahydrofurans.

Unrefined, refined and rerefined oils, either natural or synthetic (as well as mixtures of two or more of any of these) of the type disclosed hereinabove can be used in the concentrates of the present invention. Unrefined oils are those obtained directly from a natural or synthetic source without further purification treatment. For example, a shale oil obtained directly from retorting operations, a petroleum oil obtained directly from primary distillation or ester oil obtained directly from an esterification process and used without further treatment would be an unrefined oil. Refined oils are similar to the unrefined oils except they have been further treated in one or more purification steps to improve one or more properties. Many such purification techniques are known to those skilled in the art such as solvent extraction, secondary distillation, acid or base extraction, filtration, percolation. Rerefined oils are obtained by processes similar to those used to obtain refined oils applied to refined oils which have been already used in service. Such rerefined oils are also known as reclaimed or reprocessed oils and often are additionally processed by techniques directed to removal of spent additives and oil breakdown products.

Generally the lubricants and functional fluids of the present invention contain an amount of one or more of the sulfur- containing compositions of this invention sufficient to provide them with improved antioxidant, anti-wear and/or extreme pressure properties. Normally the amount employed will be 0.01% to 20%, preferably 0.1% to 10% of the total weight of the lubricating or functional fluid composition. In lubricating compositions operated under extremely adverse conditions, such as lubricating compositions for marine diesel engines, the sulfurcontaining compositions of this invention may be present in amounts of up to about 30% by weight, or more, of the total weight of the lubricating composition.

In one embodiment, the lubricating oil compositions of the present invention contain less than about 0.1% by weight of phosphorus, and more generally less than about 0.08% by weight of phosphorus. In some instances, the compositions may contain no phosphorus. Generally, the phosphorus which is present within the lubricating oil compositions of the present invention is in the form of a phosphorodithioate, and more particularly, as Group II metal phosphorodithioates, organic phosphites such as trialkyl phosphites, etc. Lubricating

oil compositions containing less than about 0.1% by weight of phosphorus, and more preferably less than about 0.08% by weight of phosphorus generally are known in the art as "low phosphorus lubricating oils".

The invention also contemplates the use of other additives in combination with the sulfur-containing compositions of this invention. Such additives include, for example, detergents and dispersants of the ash-producing or ashless type, corrosion- and oxidation-inhibiting agents, pour point depressing agents, extreme pressure agents, antiwear agents, color stabilizers and anti-foam agents.

The ash-producing detergents are exemplified by oil-soluble neutral and basic salts of alkali or alkaline earth metals with sulfonic acids or carboxylic acids. The most commonly used salts of such acids are those of sodium, potassium, lithium, calcium, magnesium, strontium and barium.

The term "basic salt" is used to designate metal salts wherein the metal is present in stoichiometrically larger amounts than the organic acid group. The commonly employed methods for preparing the basic salts involve beating a mineral oil solution of an acid with a stoichiometric excess of a metal neutralizing agent such as the metal oxide, hydroxide, carbonate, bicarbonate, or sulfide at a temperature of about 50°C and filtering the resulting mass. The use of a "promoter" in the neutralization step to aid the incorporation of a large excess of metal likewise is known. Examples of compounds useful as the promoter include phenolic substances such as phenol, naphthol, alkylphenol, thiophenol, sulfurized alkylphenol, and condensation products of formaldehyde with a phenolic substance; alcohols such as methanol, 2-propanol, octyl alcohol, cellosolve, carbitol, ethylene glycol, stearyl alcohol, and cyclohexyl alcohol; and amines such as aniline, phenylenediamine, phenothiazine, phenyl-beta-naphthylamine, and dodecylamine. A particularly effective method for preparing the basic salts comprises mixing an acid with an excess of a basic alkaline earth metal neutralizing agent and at least one alcohol promoter, and carbonating the mixture at an elevated temperature such as 60-200°C.

Ashless detergents and dispersants are so called despite the fact that, depending on its constitution, the dispersant may upon combustion yield a non-volatile material such as boric oxide; however, it does not ordinarily contain metal and therefore does not yield a metal-containing ash on combustion. Many types are known in the art, and any of them are suitable for use in the lubricant compositions of this invention. The following are illustrative:

(1) Reaction products of carboxylic acids (or derivatives thereof) containing at least about 34 and preferably at least about 54 carbon atoms with nitrogen containing compounds such as amine, organic hydroxy compounds such as phenols and alcohols, and/or basic inorganic materials. Examples of these "carboxylic dispersants" are described in British Patent 1,306,529 and in many U.S. patents including the following:

| | | |
|---|---|---|
| 3,163,603 | 3,351,552 | 3,541,012 |
| 3,215,707 | 3,399,141 | 3,542,680 |
| 3,271,310 | 3,433,744 | 3,574,101 |
| 3,281,357 | 3,448,048 | 3,630,904 |
| 3,311,558 | 3,451,933 | 3,632,511 |
| 3,340,281 | 3,467,668 | 3,725,441 |
| 3,346,493 | 3,522,179 | Re 26,433 |

(2) Reaction products of relatively high molecular weight aliphatic or alicyclic halides with amines, preferably oxyalkylene polyamines. These may be characterized as "amine dispersants" and examples thereof are described for example, in the following U.S. patents:

| | |
|---|---|
| 3,275,554 | 3,454,555 |
| 3,438,757 | 3,565,804 |

(3) Reaction products of alkyl phenols in which the alkyl group contains at least about 30 carbon atoms with aldehydes (especially formaldehyde) and amines (especially polyalkylene polyamines), which may be characterized as "Mannich dispersants". The materials described in the following U.S. patents are illustrative:

| | | |
|---|---|---|
| 2,459,112 | 3,442,808 | 3,591,598 |
| 2,984,550 | 3,454,497 | 3,634,515 |
| 3,166,516 | 3,461,172 | 3,697,574 |
| 3,355,270 | 3,539,633 | 3,725,480 |
| 3,413,347 | 3,586,629 | 3,980,569 |

(4) Products obtained by post-treating the carboxylic, amine or Mannich dispersants with such reagents as urea, thiourea, carbon disulfide, aldehydes, ketones, carboxylic acids, hydrocarbon-substituted succinic anhydrides, nitriles, epoxides, boron compounds. Exemplary materials of this type are described in the following U.S. patents:

| | | | |
|---|---|---|---|
| 3,036,003 | 3,282,955 | 3,493,520 | 3,639,242 |
| 3,200,107 | 3,366,569 | 3,513,093 | 3,649,659 |
| 3,254,025 | 3,373,111 | 3,539,633 | 3,697,574 |
| 3,278,550 | 3,442,808 | 3,579,450 | 3,703,536 |
| 3,281,428 | 3,455,832 | 3,600,372 | 3,708,422 |

(5) Interpolymers of oil-solubilizimg monomers such as decyl methacrylate, vinyl decyl ether and high molecular weight olefins with monomers containing polar substituents, e.g., aminoalkyl acrylates or acrylamides and poly-(oxyethylene)-substituted acrylates. These may be characterized as "polymeric dispersants" and examples thereof are disclosed in the following U.S. patents:

| | |
|---|---|
| 3,329,658 | 3,666,730 |
| 3,449,250 | 3,687,849 |
| 3,519,565 | 3,702,300 |

Auxiliary extreme pressure agents and corrosion- and oxidation-inhibiting agents which may be included in the lubricants of the invention are exemplified by chlorinated aliphatic hydrocarbons such as chlorinated wax. Group II metal phosphorodithioates may be included in the lubricant in small amounts provided that the overall phosphorus content of the lubricant is less than 0.1% and preferably less than 0.08%. Examples of useful metal phosphorodithioates include zinc dicyclohexylphosphorodithioate, zinc dioctylphosphorodithioate, barium di(heptylphenyl)phosphorodithioate, cadmium dinonylphosphorodithioate, and the zinc salt of a phosphorodithioic acid produced by the reaction of phosphorus pentasulfide with an equimolar mixture of isopropyl alcohol and n-hexyl alcohol.

Pour point depressants are a particularly useful type of additive often included in the lubricating oils described herein. The use of such pour point depressants in oil-based compositions to improve low temperature properties of oil-based compositions is well known in the art. See, for example, page 8 of "Lubricant Additives" by C.V. Smalheer and R. Kennedy Smith (Lezius-Hiles Co. publishers, Cleveland, Ohio, 1967).

Examples of useful pour point depressants are polymethacrylates; polyacrylates; polyacrylamides; condensation products of haloparaffin waxes and aromatic compounds; vinyl carboxylate polymers; and terpolymers of dialkylfumarates, vinyl esters of fatty acids and alkyl vinyl ethers. Pour point depressants useful for the purposes of this invention, techniques for their preparation and their uses are described in U.S. Patents 2,387,501; 2,015,748; 2,655,479; 1,815,022; 2,191,498; 2,666,746; 2,721,877; 2,721,878; and 3,250,715.

Anti-foam agents are used to reduce or prevent the formation of stable foam. Typical anti-form agents include silicones or organic polymers.

The sulfur-containing compositions of this invention can be added directly to the lubricant or functional fluid. Preferably, however, they are diluted with a substantially inert, normally liquid organic diluent such as mineral oil, naphtha, benzene, toluene or xylene, to form am additive concentrate. These concentrates usually contain from 20% to 90% by weight of the sulfurized compositions of this invention and may contain, in addition, one or more other additives known in the art or described hereinabove. The remaimder of the concentrate is the

substantially inert normally liquid diluent.

The following are illustrative examples of the lubricating compositions of the present invention. All parts and percentages are by weight of the total composition unless otherwise indicated.

| | Parts by Weight |
|---|---|
| <u>Lubricant A</u> | |
| Base oil | 98 |
| Product of Example AB | 1.25 |
| Product of Example B-1-H | 0.75 |
| <u>Lubricant B</u> | |
| Base oil | 98 |
| Product of Example AC | 1 |
| Product of Example B-3-N | 1 |
| <u>Lubricant C</u> | |
| Base oil | 98 |
| Product of Example AC | 1.5 |
| Pine oil | 0.5 |
| <u>Lubricant D</u> | |
| Base oil | 98 |
| Product of Example AF | 0.75 |
| Product of Example B-1-C | 1.25 |
| <u>Lubricant E</u> | |
| Base oil | 96 |
| Product of Example AB | 2 |
| Product of Example B-1-C | 1 |
| Product of Example B-3-N | 1 |
| <u>Lubricant F</u> | |
| Product of Example AB | 0.80 |
| Product of Example B-1-H | 0.35 |
| Zinc di-n-octyl phosphorothioate | 0.05(P) |
| Polybutenyl succinic anhydride-ethylene polyamine reaction product | 3.25 |
| C9 mono- and di-para-alkylated diphenylamine | 0.35 |
| basic sodium petroleum sulfonate | 0.25 |
| basic calcium petroleum sulfonate | 0.40 |
| silicone antifoam agent | 70 ppm |
| Base oil | remainder |

The lubricant compositions of the present invention may be in the form of lubricating oils and greases in which any of the above-described oils of lubricating viscosity can be employed as a vehicle. Where the lubricant is to be used in the form of a grease, the lubricating oil generally is employed in an amount sufficient to balance the total grease composition and generally, the grease compositions will contain various quantities of thickening agents and other additive components to probide desirable properties.

A wide variety of thickening agents can be used in the preparation of the greases of this invention. Included among the thickening agents are alkali and alkaline earth metal soaps of fatty acids and fatty materials having from 12 to 30 carbon atom. The metals are typified by sodium, lithium, calcium and barium. Examples of fatty materials include stearic acid, hydroxy stearic acid, stearin, oleic acid, palmetic acid, myristic acid, cottonseed oil acids, and hydrogenated fish oils.

Other thickening agents include salt and salt-soap complexes as calcium stearate-acetate (U.S. Patent 2,197,263), barium stearate acetate (U.S. Patent 2,564,561), calcium stearate-caprylate-acetate complexes (U.S. Patent 2,999,065), calcium caprylate-acetate (U.S. Patent 2,999,066), and calcium salts and soaps of low-, intermediate- and high-molecular weight acids and of nut oil acids.

Particularly useful thickening agents employed in the grease compositions are essentially hydrophilic in character, but which have been converted into a hydrophobic condition by the introduction of long chain hydrocarbon radicals onto the surface of the clay particles prior to their use as a component of a grease composition, as, for example, by being subjected to a preliminary treatment with an organic cationic surface-active agent, such as an onium compound. Typical onium compounds are tetraalkylammonium chlorides, such as dimethyl dioctadecyl ammonium chloride, dimethyl dibenzyl ammonium chloride and mixtures thereof. This method of conversion, being well known to those skilled in the art, and is believed to require no further discussion. More specifically, the clays which are useful as starting materials in forming the thickening agents to be employed in the grease compositions, can comprise the naturally occurring chemically unmodified clays. These clays are crystalline complex silicates, the exact composition of which is not subject to precise description, since they vary widely from one natural source to another. These clays can be described as complex inorganic silicates such as aluminum silicates, magnesium silicates, barium silicates, and the like, containing, in addition to the silicate lattice, varying amounts of cation-exchangeable groups such as sodium. Hydrophilic clays which are particularly useful for conversion to desired thickening agents include montmorillonite clays, such as bentonite, attapulgite, hectorite, illite, saponite, sepiolite, biotite, vermiculite, zeolite clays. The thickening agent is employed in an amount from 0.5 to 30, and preferably from 3% to 15% by weight of the total grease composition.

The invention also includes aqueous compositions characterized by an aqueous phase with at least one sulfur-containing composition of the invention dispersed or dissolved in said aqueous phase. Preferably, this aqueous phase is a continuous aqueous phase, although in some embodiments the aqueous phase can be a discontinuous phase. These aqueous compositions usually contain at least about 25% by weight water. Such aqueous compositions encompass both concentrates containing 25% to 80% by weight, preferably from 40% to 65% water; and water-based functional fluids containing generally over about 80% by weight of water. The concentrates generally contain from 10% to 90% by weight of the sulfur-containing composition of the invention. The water-based functional fluids generally contain from 0.05% to 15% by weight of sulfur-containing compositions. The concentrates generally contain less than about 50%, preferably less than about 25%, more preferably less than about 15%, and still more preferably less than about 6% hydrocarbon oil. The water- based functional fluids generally contain less than about 15%, preferably less than about 5%, and more preferably less than about 2% hydrocarbon oil.

These concentrates and water-based functional fluids can optionally include other conventional additives commonly employed in water-based functional fluids. These other additives include surfactants; thickeners; oil-soluble, water-insoluble functional additives such as anti-wear agents, extreme pressure agents, dispersants; and supplemental additives such as corrosion-inhibitors, shear stabilizing agents, bactericides, dyes, water-softeners, odor masking agents, anti-foam agents.

The concentrates are analogous to the waterbased functional fluids except that they contain less water and proportionately more of the other ingredients. The concentrates can be converted to water-based functional fluids by dilution with water. This dilution is usually done by standard mixing techniques. This is often a convenient procedure since the concentrate can be shipped to the point of use before additional water is added. Thus, the cost of shipping a substantial amount of the water in the final water-based functional fluid is saved. Only the water necessary to formulate the concentrate (which is determined primarily by ease of handling and convenience factors), need be shipped.

Generally these water-based functional fluids are made by diluting the concentrates with water, wherein the ratio of water to concentrate is usually in the range of 80:20 to 99;1 by weight. As can be seen when dilution is carried out within these ranges, the final water-based functional fluid contains, at most, an insignificant

amount of hydrocarbon oil.

In various preferred embodiments of the invention, the water-based functional fluids are in the form of solutions while in other embodiments they are in the form of micelle dispersions or microemulsions which appear to be true solutions. Whether a solution, micelle dispersion or microemulsion is formed is dependent, inter alia, on the particular components employed.

Also included within this invention are methods for preparing aqueous compositions, including both concentrates and water-based functional fluids, containing other conventional additives commonly employed in water-based functional fluids. These methods comprise the steps of:

(1) mixing the sulfur-containing compositions of the invention with such other conventional additives either simultaneously or sequentially to form a dispersion or solution; optionally

(2) combining said dispersion or solution with water to form said aqueous concentrate; and/or

(3) diluting said dispersion or solution, or concentrate with water wherein the total amount of water used is in the amount required to provide the desired concentration of the composition of the invention and other functional additives in said concentrates or said water-based functional fluids.

These mixing steps are preferably carried out using conventional equipment and generally at room or slightly elevated temperatures, usually below 100°C and often below 50°C. As noted above, the concentrate can be formed and then shipped to the point of use where it is diluted with water to form the desired water-based functional fluid. In other instances the finished water-based functional fluid can be formed directly in the same equipment used to form the concentrate or the dispersion or solution.

The surfactants that are useful in the aqueous compositions of the invention can be of the cationic, anionic, nonionic or amphoteric type. Many such surfactants of each type are known to the art. See, for example, McCutcheon's "Emulsifiers & Detergents", 1981, North American Edition, published by McCutcheon Division, MC Publishing Co., Glen Rock, New Jersey, U.S.A.

These surfactants, when used, are generally employed in effective amounts to aid in the dispersal of the various additives, particularly the functional additives discussed below, in the concentrates and water-based functional fluids of the invention. Preferably, the concentrates can contain up to about 75% by weight, more preferably from 10% to 75% by weight of one or more of these surfactants. The water-based functional fluids can contain up to about 15% by weight, more preferably from 0.05% to 15% by weight of one or more of these surfactants.

Often the aqueous compositions of this invention contain at least one thickener for thickening said compositions. Generally, these thickeners can be polysaccharides, synthetic thickening polymers, or mixtures of two or more of these. Among the polysaccharides that are useful are natural gums such as those disclosed in "Industrial Gums" by Whistler and B. Miller, published by Academic Press, 1959. Specific examples of such gums are gum agar, guar gum, gum arabic, algin, dextrans, xanthan gum and the like. Also among the polysaccharides that are useful as thickeners for the aqueous compositions of this invention are cellulose ethers and esters, including hydroxy hydrocarbyl cellulose and hydrocarbylhydroxy cellulose and its salts. Specific examples of such thickeners are hydroxyethyl cellulose and the sodium salt of carboxymethyl cellulose. Mixtures of two or more of any such thickeners are also useful.

It is a general requirement that the thickener used in the aqueous compositions of the present invention be soluble in both cold (10°C) and hot (about 90°C) water. This excludes such materials as methyl cellulose which is soluble in cold water but not in hot water. Such hot-water-insoluble materials, however, can be used to perform other functions such as providing lubricity to the aqueous compositions of this invention.

Other useful thickeners are known to those of skill in the aft and many can be found in the list in the afore-mentioned McCutcheon Publication: "Functional Materials," 1976, pp. 135-147, inclusive.

Typically, the thickener is present in a thickening amount in the aqueous compositions of this invention. When used, the thickener is preferably present at a level of up to about 70% by weight, preferably from 20% to 50% by weight of the concentrates of the invention. The thickener is preferably present at a level in the range of from 1.5% to 10% by weight, preferably from 3% to 6% by weight of the functional fluids of the invention.

The functional additives that can be used in the aqueous systems are typically oil-soluble, water-insoluble additives which function in conventional oil-based systems as extreme pressure agents, anti-wear agents, load-carrying agents, dispersants, friction modifiers, lubricity agents. They can also function as anti-slip agents, film formers and friction modifiers. As is well known, such additives can function in two or more of the above-mentioned ways; for example, extreme pressure agents often function as load-carrying agents.

The term "oil-soluble, water-insoluble functional additive" refers to a functional additive which is not soluble in water above a level of about 1 gram per 100 milliliters of water at 25°C, but is soluble in mineral oil to the extent of at least 1 gram per liter at 25°C.

These functional additives can also include certain solid lubricants such as graphite, molybdenum disulfide and polytetrafluoroethylene and related solid polymers.

These functional additives can also include frictional polymer formers. Briefly, these are potential polymer forming materials which are dispersed in a liquid carrier at low concentration and which polymerize at rubbing or contacting surfaces to form protective polymeric films on the surfaces.

The functional additive can also be a film former such as a synthetic or natural latex or emulsion thereof in water. Such latexes include natural rubber latexes and polystyrene butadienes synthetic latex.

The functional additive can also be an anti-chatter or anti-squawk agent. Examples of the former are the amide metal dithiophosphate combinations such as disclosed in West German Patent 1,109,302; amine salt-azomethene combinations such as disclosed in British Patent Specification 893,977; or amine dithiophosphate such as disclosed in U.S. Patent 3,002,014. Examples of anti-squawk agents are N-acyl-sarcosines and derivatives thereof such as disclosed in U.S. Patents 3,156,652 and 3,156,653, sulfurized fatty acids and esters thereof such as disclosed in U.S. Patents 2,913,415 and 2,982,734; and esters of dimerized fatty acids such as disclosed in U.S. Patent 3,039,967.

Specific examples of functional additives useful in the aqueous systems of this invention include the following commercially available products.

TABLE I

| Functional Additive Tradename | Chemical Description | Supplier |
|---|---|---|
| Anglamol 32 | Chlorosulfurized hydrocarbon | Lubrizol[1] |
| Anglamol 75 | Zinc dialkyl phosphate | Lubrizol[1] |
| Molyvan L | A thiaphosphomolybdate | Vanderbilt[2] |
| Lubrizol-5315 | Sulfurized cyclic carboxylate ester | Lubrizol[1] |
| Emcol TS 230 | Acid phosphate ester | Witco[3] |

1 The Lubrizol Corporation, Wickliffe, Ohio, U.S.A.

2 R.T. Vanderbilt Company, Inc., New York, N.Y., U.S.A.

3 Witco Chemical Corp., Organics Division, Houston, Texas, U.S.A.

Mixtures of two or more of any of the afore-described functiomal additives can also be used.

Typically, a functionally effective amount of the functional additive is present in the aqueous compositions of this invention.

The term "functionally effective amount" refers to a sufficient quantity of an additive to impart desired properties intended by the addition of said additive. For example, if an additive is a rust-inhibitor, a functionally effective amount of said rust-inhibitor would be an amount sufficient to increase the rust-inhibiting characteristics of the composition to which it is added. Similarly, if the additive is an anti-wear agent, a functionally effective amount of said anti-wear agent would be a sufficient quantity of the anti-wear agent to improve the anti-wear characteristics of the composition to which it is added.

The aqueous systems of this invention often contain at least one inhibitor for corrosion of metals. These

inhibitors can prevent corrosion of either ferrous or non-ferrous metals (e.g.,,. copper, bronze, brass, titanium, aluminum or both. The inhibitor can be organic or inorganic in nature. Usually it is sufficiently soluble in water to provide a satisfactory inhibiting action though it can function as a corrosion- inhibitor without dissolving in water, it need not be water-soluble. Many suitable inorganic inhibitors useful in the aqueous systems of the present invention are known to those skilled in the art. Included are those described in "Protective Coatings for Metals" by Burns and Bradley, Reinhold Publishing Corporation, Second Edition, Chapter 13, pages 596-605.

The aqueous systems of the present invention can also include such other materials as dyes, e.g., an acid green dye; water softeners, e.g., ethylene diamine tetraacetate sodium salt or nitrilo triacetic acid; odor masking agents, e.g., citronella, oil of lemon, and the like; and anti-foamants, such as the well-known silicone anti-foamant agents.

The aqueous systems of this invention may also include an anti-freeze additive where it is desired to use the composition at a low temperature. Materials such as ethylene glycol and analogous polyoxyalkylene polyols can be used as anti-freeze agents. Clearly, the amount used will depend on the degree of anti-freeze protection desired and will be known to those of ordinary skill in the art.

It should also be noted that many of the ingredients described above for use in making the aqueous systems of this invention are industrial products which exhibit or confer more than one property on such aqueous compositions. Thus, a single ingredient can provide several functions thereby eliminating or reducing the need for some other additional ingredient. Thus, for example, an extreme pressure agent such as tributyl tin oxide can also function as a bactericide.

## Claims

1. A sulfur-containing composition comprising the combination of:

(A) at least one first sulfur-containing material which comprises the reaction product of a sulfur source and at least one Diels-Alder adduct in a molar ratio of at least 1.7:1; and

(B) at least one second material which comprises:

(1) the reaction product of a sulfur source and a Diels-Alder adduct in a molar ratio of less than 1.7:1,

(2) a terpene compound, or

(3) sulfur-containing materials obtained by sulfurizing mixtures of a terpene compound and an olefinic compound.

2. The composition of claim 1 wherein the Diels-Alder adducts of (A) and (B) are adducts of at least one dienophile with at least one aliphatic conjugated diene.

3. The composition of claim 2 wherein the dienophile in (A) and/or (B) comprises an alpha, beta-ethylenically unsaturated aliphatic carboxylic acid ester, an alpha, beta-ethylenically unsaturated aliphatic carboxylic acid amide, an alpha, beta-ethylenically unsaturated aliphatic halide, or mixtures thereof.

4. The composition of claim 2 wherein the aliphatic conjugated diene in (A) and/or (B) corresponds to the formula

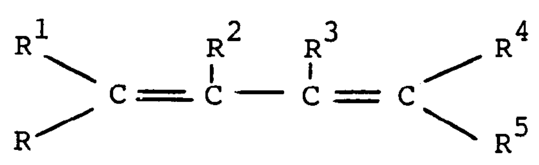

(I)

wherein R through $R^5$ are each independently selected from the group consisting of hydrogen, alkyl, halo, alkoxy, alkenyl, alkenyloxy, carboxy, carboxy ester, cyano, amino, alkylamino, dialkylamino, phenyl, and phenyl substituted with one to three substituents corresponding to R through $R^5$.

5. The composition of claim 1 wherein the molar ratio of sulfur to Diels-Alder adduct in (A) is from 1.8 to 4.0.

6. The composition of claim 1 wherein the molar ratio of sulfur to Diels-Alder adduct in (B) is less than 1.2:1.

7. The composition of claim 1 wherein :

(A) comprises the reaction product of sulfur with at least one Diels-Alder adduct in a molar ratio of from 1.8:1 to 4:1 wherein the adduct consists essentially of the 1:1 adduct of at least one dienophile selected from the group consisting of alpha, beta-ethylenically unsaturated aliphatic carboxylic acid amides and alpha, beta-ethylenically unsaturated aliphatic halides with at least one aliphatic conjugated diene corre-

sponding to the formula

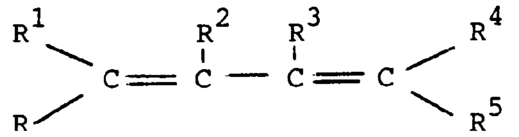

(I)

wherein R through $R^5$ are each independently selected from the group consisting of hydrogen, alkyl, halo, alkoxy, alkenyl, alkenyloxy, carboxy, carboxy ester, cyano, amino, alkylamino, dialkylamino, phenyl, and phenyl substituted with one to three substituents corresponding to R through $R^5$; and (B) comprises:

(1) a reaction product as defined in (A) above except that the molar ratio of sulfur to Diels-Alder adduct is less than about 1:1,

(2) a terpene compound, or

(3) a sulfurized composition prepared by sulfurizing a mixture of at least one terpene compound and at least one other olefinic compound of the formula

$$R^1R^2C=CR^3R^4 \qquad \text{(VII)}$$

wherein $R^1$, $R^2$, $R^3$ and $R^4$ are, independently, hydrogen or any organic group and the olefinic double bond is a nonaromatic double bond, and the equivalent ratio of the mixture of terpene compound to olefinic compound is from 1:20 to 10:1;

8. The composition of any one claims 4 and 7 wherein $R^2$ and $R^3$ in (A) and or/(B) are hydrogen, and R, $R^1$, $R^4$ and $R^5$ are each independently hydrogen, chloro, or lower alkyl.

9. The composition of any one of claims 3 and 7 wherein the dienophile in (A) and/or (B) is further characterized in that it contains at least one, but not more than two

$$-C(O)\ OR_0$$

wherein $R_0$ is residue of a saturated aliphatic alcohol of up to about 40 atoms.

10. The composition according to claim 9 wherein said dienophile is an ester of acrylic acid or methacrylic acid.

11. The composition according to any one of claims 4 and 7 wherein the diene is piperylene, isoprene, methylisoprene, chloroprene, 1,3-butadiene, or mixtures thereof.

12. The composition according to claim 11 wherein the diene is 1,3-butadiene.

13. The composition of any one of claims 1 and 7 wherein the terpene compound comprises a mixture of terpene hydrocarbons and their oxygen-containing derivatives.

14. The composition of any one of claims 1 and 7 wherein the terpene compound is a turpentine, pine oil, or dipentene.

15. The composition of claim 13 wherein the oxygen-containing derivatives are terpene alcohols.

16. The composition of claim 14 wherein the terpene compound is a pine oil.

17. The composition of claim 1 wherein the weight ratio of (A) to (B) is from 1:10 to 10:1.

18. The composition of claim 1 wherein the second material (B) is selected from (1), (3) or mixtures thereof.

19. The composition of claim 1 wherein :

(A) comprises the reaction product of sulfur with a cyclohexenoic acid or acid ester in a mole ratio of 1.8:1 to 2.2:1; and

(B) comprises :

(1) a sulfur-containing material as in (A) except that the sulfur to cyclohexenoic acid or ester ratio is from 0.8:1 to 1.2:1, or

(2) a sulfurized composition prepared by sulfurizing a mixture of a pine oil and at least one alpha-ethylenically unsaturated aliphatic olefin containing from 8 to 36 carbon atoms.

20. An additive concentrate comprising a substantially inert, normally liquid diluent and 20-90% by weight of the sulfur-containing composition of claims 1, 7 or 19.

21. A lubricant or functional fluid composition comprising a major amount of at least one oil of lubricating viscosity and a minor amount of a sulfur-containing composition of claims 1, 7 or 19.

22. A process for the preparation of a sulfur-containing composition comprising admixing :

(A) at least one first sulfur-containing material which comprises the reaction product of a sulfur source and at least one Diels-Alder adduct in a molar ratio of at least 1.7:1; and

(B) at least one second material which comprises:

(1) the reaction product of a sulfur source and a Diels-Alder adduct in a molar ratio of less than 1.7:1,

(2) a terpene compound, or

(3) sulfur-containing materials obtained by sulfurizing mixtures of a terpene compound and an olefinic

compound.

## Patentansprüche

1. Schwefelhaltige Zusammensetzung, umfassend die Kombination von

(A) mindestens einem ersten schwefelhaltigen Material, welches das Umsetzungsprodukt einer Schwefelquelle und mindestens eines Diels-Alder-Adduktes in einem Molverhältnis von mindestens 1,7:1 umfaßt; und

(B) mindestens einem zweiten Material, welches umfaßt:

(1) das Reaktionsprodukt einer Schwefelquelle und eines Diels-Alder-Adduktes in einem Molverhältnis von weniger als 1,7:1,

(2) eine Terpenverbindung,

(3) schwefelhaltige Substanzen, die durch Schwefelung von Gemischen aus einer Terpenverbindung und einer olefinischen Verbindung erhalten wurden.

2. Zusammensetzung nach Anspruch 1, in der die Diels-Alder Addukte von (A) und (B) Addukte von mindestens einem Dienophil mit mindestens einem aliphatischen konjugierten Dien sind.

3. Zusammensetzung nach Anspruch 2, in der das Dienophil in (A) und/oder (B) einen alpha, beta-ethylenisch ungesättigten aliphatischen Carbonsäureester, ein alpha, beta-ethylenisch ungesättigtes aliphatisches Carbonsäureamid, ein alpha, beta-ethylenisch ungesättigtes aliphatisches Halogenid oder ein Gemisch davon umfaßt.

4. Verfahren nach Anspruch 2, in der das aliphatische konjugierte Dien (A) und/oder (B) der Formel

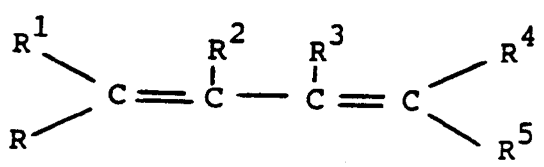

(I)

entspricht, in der R bis $R^5$ jeweils unabhängig voneinander ausgewählt sind aus der Gruppe, die aus Wasserstoff, Alkyl-, Halogen-, Alkoxy-, Alkenyl-, Alkenyloxy-, Carboxy-, Carboxyester-, Cyano-, Amino-, Alkylamino-, Dialkylamino-, Phenyl- und mit einem bis drei R bis $R^5$ entsprechenden Substituenten substituierten Phenylgruppen besteht.

5. Zusammensetzung nach Anspruch 1, in der das Molverhältnis von Schwefel zu Diels-Alder-Addukt in (A) 1,8 bis 4,0 beträgt.

6. Zusammensetzung nach Anspruch 1, in der das Molverhältnis von Schwefel zu Diels-Alder-Addukt in (B) geringer als 1,2:1 ist.

7. Zusammensetzung nach Anspruch 1, in der

(A) das Reaktionsprodukt von Schwefel mit mindestens einem Diels-Alder-Addukt in einem Molverhältnis von 1,8:1 bis 4:1 umfaßt, wobei das Addukt im wesentlichen aus dem 1:1-Addukt mindestens eines Dienophils, ausgewählt aus der Gruppe, die besteht aus alpha, beta-ethylenisch ungesättigten aliphatischen Carbonsäureamiden und alpha, beta-ethylenisch ungesättigten aliphatischen Halogeniden, mit mindestens einem aliphatischen konjugierten Dien der Formel

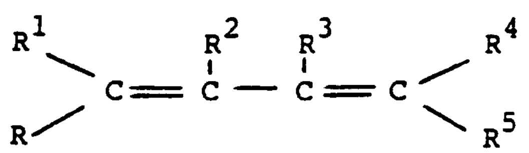

(I)

besteht, wobei R bis $R^5$ jeweils unabhängig ausgewählt sind aus der Gruppe, die besteht aus Wasserstoff, Alkyl-, Halogen-, Alkoxy-, Alkenyl-, Alkenyloxy-, Carboxy-, Carboxyester-, Cyano-, Amino-, Alkylamino-, Dialkylamino-, Phenyl- und mit ein bis drei R bis $R^5$ entsprechenden Substituenten substituierten Phenylgruppe besteht; und

(B) umfaßt:

(1) ein Reaktionsprodukt wie vorstehend in (A) definiert, ausgenommen, daß das Molverhältnis von Schwefel zu Diels-Alder-Addikt geringer als etwa 1:1 ist,

(2) eine Terpenverbindung, oder

(3) eine geschwefelte Zusammensetzung, hergestellt durch Schwefelung eines Gemisches von mindestens einer Terpenverbindung und mindestens einer anderen olefinischen Verbindung der Formel

$$R^1R^2C=CR^3R^4 \qquad (VII)$$

in der $R^1$, $R^2$, $R^3$ und $R^4$ unabhängig Wasserstoffatome oder irgendwelche organischen Reste sind und die olefinische Doppelbindung eine nicht-aromatische Doppelbindung ist, und das Äquivalentverhältnis des Gemisches von Terpenverbindung zu olefinischer Verbindung 1:20 bis 10:1 beträgt.

8. Zusammensetzung nach einem der Ansprüche 4 und 7, in der $R^2$ und $R^3$ in (A) und/oder (B) Wasserstoffatome sind und R, $R^1$, $R^4$ und $R^5$ jeweils unabhängig Wasserstoff- oder Chloratome oder Niederalkylreste sind.

9. Zusammensetzung nach einem der Ansprüche 3 und 7, wobei das Dienophil in (A) und/oder (B) ferner dadurch gekennzeichnet ist, daß es mindestens einen, jedoch nicht mehr als zwei Reste der Formel

$$-C(O)OR_0$$

enthält, wobei $R_0$ der Rest eines gesättigten aliphatischen Alkohols mit bis zu etwa 40 Kohlenstoffatomen ist.

10. Zusammensetzung nach Anspruch 9, wobei das Dienophil ein Ester von Acrylsäure oder Methacrylsäure ist.

11. Zusammensetzung nach einem der Ansprüche 4 und 7, in der das Dien Piperylen, Isopren, Methylisopren, Chloroprem, 1,3-Butadien oder ein Gemisch davon ist.

12. Zusammensetzung nach Anspruch 11, in der das Dien 1,3- Butadien ist.

13. Zusammensetzung nach einem der Ansprüche 1 und 7, in der die Terpenverbindung ein Gemisch von Terpen-Kohlenwasserstoffen und ihren Sauerstoff enthaltenden Derivaten ist.

14. Zusammensetzung nach einem der Ansprüche 1 und 7, in der die die Terpenverbindung ein Terpentin, Kiefernöl oder Dipenten ist.

15. Zusammensetzung nach Anspruch 13, in der die Sauerstoff enthaltenden Derivate Terpenalkohole sind.

16. Zusammensetzung nach Anspruch 14, in der die Terpenverbindung ein Kiefernöl ist.

17. Zusammensetzung nach Anspruch 1, in der das Gewichtsverhältnis von (A) zu (B) von 1:10 bis 10:1 beträgt.

18. Zusammensetzung nach Anspruch 1, in der das zweite Material (B) aus (1), (3) oder Gemischen davon ausgewählt ist.

19. Zusammensetzung nach Anspruch 1, in der

(A) das Reaktionsprodukt von Schwefel mit einer Cyclohexensäure oder -säureester in einem Molverhältnis von 1,8:1 bis 2,2:1 umfaßt, und

(B) umfaßt:

(1) ein schwefelhaltiges Material wie in (A) mit der Änderung, daß das Verhältnis von Schwefel zu Cyclohexensäure oder -ester von 0,8:1 bis 1,2:1 beträgt, oder

(2) eine geschwefelte Zusammensetzung, hergestellt durch Schwefelung eines Gemisches aus einem Kiefernöl und mindestens einem $\alpha$-ethylenisch ungesättigten aliphatischen Olefin mit 8 bis 36 Kohlenstoffatomen.

20. Zusatzkonzentrat, umfassend ein im wesentlichen inertes, unter Normalbedingungen flüssiges Verdünnungsmittel und 20 bis 90 Gew.-% der Schwefel enthaltenden Zusammensetzung nach den Ansprüchen 1, 7 oder 19.

21. Schmiermittel oder funktionelle Flüssigkeit, umfassend eine größere Menge mindestens eines Öls mit Schmiermittelviskosität und eine geringere Menge einer Schwefel enthaltenden Zusämmensetzung nach den Ansprüchen 1, 7 oder 19.

22. Verfahren zur Herstellung einer Schwefel enthaltenden Zusammensetzung, umfassend das Vermischen von

(A) mindestens einem ersten Schwefel enthaltenden Material, welches das Umsetzungsprodukt einer Schwefelquelle und mindestens eines Diels-Alder-Addukts in einem Molverhältnis von mindestens 1,7:1 ist, und

(B) mindestens einem zweiten Material, welches umfaßt:

(1) das Umsetzungsprodukt einer Schwefelquelle und eines Diels-Alder-Adduktes in einem Molverhältnis von weniger als 1,7:1,

(2) eine Terpenverbindung, oder

(3) Schwefel enthaltende Substanzen, erhalten durch Schwefelung von Gemischen aus einer Terpenverbindung und einer olefinischen Verbindung.

## Revendications

1. Une composition contenant du soufre comprenant la combinaison de:

(A) au moins un premier matériau contenant du soufre qui comprend le produit de la réaction d'une source de soufre et d'au moins un produit de l'addition de Diels-Alder dans un rapport molaire d'au moins 1,7:1 ; et

(B) au moins un second matériau qui comprend

(1) le produit de la réaction d'une source de soufre et d'un produit de l'addition de Diels-Alder dans un rapport molaire inférieur 1,7:1,

(2) un composé terpènique, ou

(3) des matériaux contenant du soufre obtenus par sulfurisation de mélanges d'un composé terpènique et d'un composé oléfinique.

2. La composition de la revendication 1 dans laquelle les produits de l'addition de Diels-Alder de (A) et (B) sont des produits de l'addition d'au moins un diènophile avec au moins un diène aliphatique conjugué.

3. La composition de la revendication 2 dans laquelle le diénophile dans (A) et/ou (B) comprend un ester alpha, béta-ethyléniquement insaturé d'acide carboxylique aliphatique, un amide alpha, béta-éthyléniquement insaturé d'acide carboxylique aliphatique, un halogénure aliphatique alpha, béta-éthyléniquement insaturé, ou des mélanges de ceux-ci.

4. La composition de la revendication 2 dans laquelle le diène conjugué aliphatique dans (A) et/ou (B) correspond à la formule

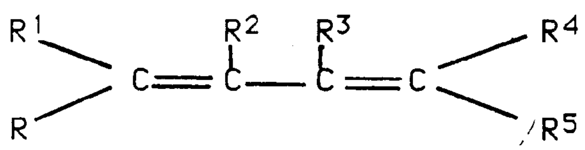

(I)

dans laquelle R jusqu'à $R^5$ sont chacun indépendamment choisis dans le groupe consistant en l'hydrogène, un groupe alkyle, halo, alkoxy, alkényle, alkényloxy, carboxy, ester carboxylique, cyano, amino, alkylamino, dialkylamino, phényle, et phényle substitué avec de un à trois substituants correspondant à R jusqu'à $R^5$.

5. La composition de la revendication 1 dans laquelle le rapport molaire du soufre au produit de l'addition de Diels-Alder dans (A) est compris entre 1,8 et 4,0.

6. La composition de la revendication 1 dans laquelle le rapport molaire du soufre au produit de l'addition de Diels-Alder dans (B) est inférieur à 1,2:1.

7. La composition de la revendication 1 dans laquelle:

(A) comprend le produit de la réaction du soufre avec au moins un produit de l'addition de Diels-Alder dans un rapport molaire allant de 1,8:1 à 4:1 dans laquelle le produit de l'addition consiste essentiellement en le produit de l'addition 1:1 d'au moins un diènophile choisi dans le groupe consistant en amides alpha, béta-éthyléniquement insaturés d'acide carboxylique aliphatique et en halogénures aliphatiques alpha, béta-éthyléniquement insaturés avec au moins un diène conjugué aliphatique correspondant à la formule

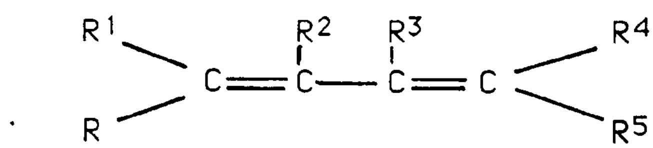

(I)

dans laquelle R jusqu'à $R^5$ sont chacun indépendamment choisis dans le groupe consistant en l'hydrogène, un groupe alkyle, halo, alkoxy, alkényle, alkényloxy, carboxy, ester carboxylique, cyano, amino, alkylamino, dialkylamino, phényle, et phényle substitué avec de un à trois substituants correspondant à R jusqu'à $R^5$; et

(B) comprend:

(1) un produit de réaction comme défini en (A) ci-dessus à l'exception que le rapport molaire du soufre au produit de l'addition de Diels-Alder est inférieur à environ 1:1,

(2) un composé terpènique, ou

(3) des matériaux contenant du soufre obtenus par sulfurisation d'un mélange d'au moins un composé terpènique et d'au moins un autre composé oléfinique de formule

$$R^1R^2C=CR^3R^4 \qquad (VII)$$

dans laquelle R1, R2, R3 et R4 sont, indépendamment, de l'hydrogène ou tout groupe organique et la double liaison oléfinique est une double liaison non-aromatique, et le rapport équivalent dans le mélange du composé terpènique au composé oléfinique va de 1:20 à 10:1;

8. La composition de l'une quelconque des revendications 4 et 7 dans laquelle $R^2$ et $R^3$ dans (A) et/ou dans (B) sont de l'hydrogène, et R, $R^1$, $R^4$ et $R^5$ sont chacun indépendamment de l'hydrogène, un groupement chloro, ou alkyle inférieur.

9. La composition de l'une quelconque des revendications 3 et 7 dans laquelle le diènophile dans (A) et/ou (B) est de plus caractérisé en ce qu'il contient au moins un, mais pas plus de deux

$$-C(O)OR_0$$

dans lequel $R_0$ est le résidu d'un alcool aliphatique saturé de jusqu'à environ 40 atomes de carbone.

10. La composition selon la revendication 9 dans laquelle ledit diénophile est un ester d'acide acrylique ou d'acide métacrylique.

11. La composition selon l'une quelconque des revendications 4 et 7 dans laquelle le diène est le pipérylène, l'isoprène, le méthylisoprène, le chloroprène, le 1,3-butadiène, ou des mélanges de ceux-ci.

12. La composition selon la revendication 11 dans laquelle le diène est le 1,3-butadiène.

13. La composition de l'une quelconque des revendications 1 et 7 dans laquelle le composé terpènique comprend un mélange d'hydrocarbures terpéniques et de leurs dérivés contenant de l'oxygène.

14. La composition de l'une quelconque des revendications 1 et 7 dans laquelle le composé terpènique est une turpentine, de l'huile de pin, ou du dipentène.

15. La composition de la revendication 13 dans laquelle les dérivés contenant de l'oxygène sont des alcools terpèniques.

16. La composition de la revendication 14 dans laquelle le composé terpénique est une huile de pin.

17. La composition de la revendication 1 dans laquelle le rapport en masse de (A) à (B) va de 1:10 à 10:1.

18. La composition de la revendication 1 dans laquelle le second matériau (B) est choisi parmi (1), (3) ou des mélanges de ceux-ci.

19. La composition de la revendication 1 dans laquelle:

(A) comprend le produit de la réaction du soufre avec un acide cyclohéxènoïque ou un ester de l'acide dans un rapport molaire de 1,8:1 à 2,2:1 ; et

(B) comprend:

(1) un matériau contenant du soufre comme dans (A) excepté que le rapport du soufre à l'acide ou l'ester cyclohéxénoïque va de 0,8:1 à 1,2:1, ou

(2) une composition soufrée préparée par sulfurisation d'un mélange d'une huile de pin et d'au moins une oléfine aliphatique alpha-éthyléniquement insaturée contenant de 8 à 36 atomes de carbone.

20. Un concentré d'additif comprenant un diluant substantiellement inerte, normalement liquide et 20-90% en poids de la composition contenant du soufre des revendications 1, 7 ou 19.

21. Une composition lubrifiante ou fluide fonctionnelle comprenant une quantité importante d'au moins une huile de viscosité lubrifiante et une petite quantité d'une composition contenant du soufre des revendications 1, 7 ou 19.

22. Un procédé pour la préparation d'une composition contenant du soufre comprenant le mélange :

(A) d'au moins un premier matériau/contenant du soufre qui comprend le produit de la réaction d'une source de soufre et d'au moins un produit de l'addition de Diels-Alder dans un rapport molaire d'au moins 1,7:1 ; et

(B) d'au moins un second matériau qui comprend:

(1) le produit de la réaction d'une source de soufre et d'un produit de l'addition de Diels-Alder dans un rapport molaire inférieur à 1,7:1,

(2) un composé terpènique, ou

(3) des matériaux contenant du soufre obtenus par sulfurisation de mélanges d'un composé terpènique et d'un composé oléfinique.